# EUROPÄISCHE PATENTSCHRIFT

(11) **EP 2 477 915 B1**
(45) Veröffentlichungstag und Bekanntmachung des Hinweises auf die Patenterteilung: **20.11.2013**
(21) Anmeldenummer: 10770940.4
(22) Anmeldetag: 14.09.2010
(51) Int. Cl.: B65G 23/08, H01R 25/14, B65G 13/06

(54) **FÖRDERANLAGE ZUM FÖRDERN VON FÖRDERGUT**
CONVEYOR FOR CONVEYING MATERIAL TO BE CONVEYED
INSTALLATION DE CONVOYAGE DESTINÉE À ACHEMINER DES BIENS À TRANSPORTER

(30) Priorität: 14.09.2009 AT 14532009
(43) Veröffentlichungstag der Anmeldung: 25.07.2012
(73) Patentinhaber: TGW Mechanics GmbH, 4600 Wels (AT)
(72) Erfinder: REISCHL, Josef, A-4623 Gunskirchen (AT); WOLKERSTORFER, Christoph, A -4600 WeIs (AT)
(74) Vertreter: Burger, Hannes
(86) Internationale Anmeldenummer: PCT/AT2010/000332
(87) Internationale Veröffentlichungsnummer: WO 2011/029119

(56) Entgegenhaltungen:
- EP-A2- 1 047 182
- WO-A1-2004/067416
- JP-A- 2 201 881
- JP-A- 60 122 615

## Beschreibung

Die Erfindung betrifft eine Förderanlage zum Fördern von Fördergut wie im Oberbegriff des Ansprüchs 1, beschrieben.

Aus der EP 0 300 128 B1 ist eine Förderanlage zum Fördern von Fördergut mit einer Vielzahl von in Rahmenprofilen gehaltenen Förderrollen bekannt, wovon zumindest eine Förderrolle einen Rollenkörper mit an dessen Enden angeordneten Verschlusskappen und an den Verschlusskappen gelagerte Achsstummel sowie einen innerhalb des Rollenkörper angeordneten, elektrischen Antriebsmotor umfasst. Die Rahmenprofile sind in deren Längsrichtung mit Abstand voneinander angeordneten und paarweise gegenüberliegenden Lageraufnahmen versehen und weisen jeweils einen senkrechten Profilsteg sowie einen von der Förderrolle wegweisenden Profilschenkel auf. Jede Lageraufnahme weist einen Führungsabschnitt und eine Einschuböffnung auf. Der Führungsabschnitt erstreckt sich im Profilsteg von einer oberen Längskante in Richtung einer unteren Längskante. Die Einschuböffnung erstreckt sich von der oberen Längskante mit einer Tiefe bis in den oberen Profilschenkel hinein. Die Förderrolle ist über auf die Achsstummel aufsetzbare Lagervorrichtungen in den Lageraufnahmen verdrehgesichert gelagert. Die Lagervorrichtungen werden von einem Monteur vor Ort vorerst auf die Achsstummeln aufgepresst, ehe die Förderrolle mit den Lagervorrichtungen an den Rahmenprofilen in die Lageraufnahmen eingesetzt wird. An einem der Rahmenprofile ist auf dem Profilsteg ein Leistungsbus zur Stromversorgung der motorisierten Förderrolle angeordnet. Der Leistungsbus weist unterhalb der Lageraufnahme am Profilsteg freigelegte Kontaktabschnitte auf, sodass auf der Montagebewegung der motorisierten Förderrolle in radialer Richtung relativ zum Rahmenprofil federnde Kontaktelemente mit den freigelegten Kontaktabschnitten elektrisch verbunden werden. Die freiliegenden Kontaktabschnitte sind besonders anfällig gegenüber Verschmutzungen.

Die US 2005/0087428 A1 offenbart eine Förderanlage zum Fördern von Fördergut mit einer Vielzahl von in Rahmenprofilen gehaltenen Förderrollen und einem zwischen den Rahmenprofilen angeordneten Bussystem, wobei mehrere der Förderrollen einen Rollenkörper und einen innerhalb dessen angeordneten, elektrischen Antriebsmotor und an den gegenüberliegenden Enden des Rollenkörpers Lagervorrichtungen sowie eine Kontaktierungsvorrichtung zum Anschluss des elektrischen Antriebsmotors an das Bussystem aufweist. Die Lagervorrichtungen sind durch einen zylindrischen Lagerkörper gebildet, der eine am Ende des Rollenkörpers vorragende und gegen eines der Rahmenprofile anlegbare Lagerfläche ausbildet. Nach einer ersten Ausführung ist die Kontaktierungsvorrichtung am Lagerkörper exzentrisch zu einer Rollenachse angeordnet und ist in einem der Rahmenprofile eine mit der Kontaktierungsvorrichtung korrespondierende Anschlussöffnung vorgesehen, durch die ein Verbindungskabel zum Anschluss an das Bussystem hindurch gesteckt werden kann. Die Anordnung zusätzlicher Anschlussöffnungen je motorisierter Förderrolle führt zu einen verhältnismäßig großem Fertigungsaufwand und ist ein erhöhter Verkabelungs- und Anschlussaufwand für die motorisierten Förderrollen erforderlich. Nach einer zweiten Ausführung ist die Kontaktierungsvorrichtung an einem aus dem Lagerkörper herausgeführten Kabel angeschlossen und wird in der Lagerfläche eine Aufnahmenut für das Kabel hergestellt, damit nach der Montage der Förderrolle an den Rahmenprofilen, das Verbindungskabel in radialer Richtung aus der Lagervorrichtung heraus geführt werden kann. Ein wesentliches Problem liegt darin, dass die Montage der Förderrolle mit größter Sorgfalt erfolgen muss. Es muss sichergestellt werden, dass sich das Kabel innerhalb der Aufnahmenut befindet. Wird das Verbindungskabel zwischen dem Rahmenprofil und der Lagervorrichtung eingeklemmt, kann eine Beschädigung des Verbindungskabels, insbesondere dessen Isolierung, nicht vermieden werden. Somit können die motorisierten Förderrollen nur mit verhältnismäßig großem Montageaufwand montiert werden.

Eine Förderanlage zum Fördern von Fördergut ist auch aus der WO 2007/036421 A1 bekannt, die Förderrollen mit einem Rollenkörper, einem innerhalb dessen angeordneten, elektrischen Antriebsmotor, einer elektrischen Kontaktierungsvorrichtung zum Anschluss einer Antriebselektronik an ein Bussystem sowie in Lageraufnahmen an den Rahmenprofilen montierbare Lagervorrichtungen aufweist. Eine der Lagervorrichtungen ist mit der elektrischen Kontaktierungsvorrichtung und Antriebselektronik ausgestattet, wobei Kontaktelemente der Kontaktierungsvorrichtung stirnseitig an der Lagervorrichtung angeordnet sind und aus der Lageraufnahme an einem der Rahmenprofile herausragen. Das Bussystem wird im Rahmenprofil auf einer der Förderrollen abgewandten Außenseite des Profilsteges verlegt und mit der Kontaktierungsvorrichtung verbunden, indem an der Außenseite des Profilsteges zusätzlich Kappen verwendet werden, welche am Rahmenprofil angeschraubt und dabei die Kabel des Bussystems gegen die Kontaktelemente gedrückt werden. Die Verwendung zusätzlicher Kappen je motorisierter Förderrolle erhöht den Anschluss- und Montageaufwand.

Die US 2004/0198090 A1 offenbart darüber hinaus einen Aktuator, welcher eine Anschlussbox mit einem Eingang und einem Ausgang umfasst. In diese Anschlussbox kann ein Bandkabel eingelegt werden, welche zwei Versorgungsleitungen und eine Signalleitung aufweist. Beim Schließen der Anschlussbox werden die genannten Leitungen mit Hilfe von Schneidklemmen kontaktiert. Darüber hinaus wird die Signalleitung mit Hilfe einer Trennschneide getrennt, sodass die Signalleitung mehrere Aktuatoren in Serie verbindet.

Die US 6,848,933 B1 offenbart schließlich einen Rollenförderer mit einer Vielzahl von Modulen, welche einen Motor und eine Anschlussbox aufweisen. In diese Anschlussbox kann ein Bandkabel eingelegt werden, welche Versorgungsleitungen und Signalleitungen aufweist. Beim Schließen der Anschlussbox werden die genannten Leitungen mit Hilfe von Stiften, welche die Isolation des Kabels durchdringen, kontaktiert. Darüber hinaus können einzelne Signalleitung mit Hilfe einer Trennschneide getrennt werden.

JP 60 122 615 A1 offenbart eine Förderanlage gemäss dem Oberbegriff des Anspruchs 1. Diese Anlage weist Förderrolle auf, deren Antriebsmotor durch ein Leitungssystem mit Strom versorgen sind. Das Leitungssystem wird nicht geschützt und kann deshalb beschädigt werden, während der Montage der Förderrolle.

Die Aufgabe der Erfindung liegt darin, eine Förderanlage zum Fördern von Fördergut zu schaffen, bei der eine motorisierte Förderrolle mit geringem Montageaufwand zuverlässig montier werden kann, und bei der die Beschädigung der Leitungssystem während der Montage verhindert werden kann.

Die Aufgabe der Erfindung wird durch die Merkmale des Anspruches 1 gelöst. Das Leitungssystem zwischen der Antriebselektronik und der Kontaktierungsvorrichtung wird durch eine Aussparung hindurchgeführt, sodass auf der Montagebewegung der motorisierten Förderrolle in radialer Richtung relativ zum Rahmenprofil das Leitungssystem nicht beschädigt wird. Gemäß der Erfindung ist die Lagervorrichtung nicht durch in der Außenfläche vertieft angeordnete Aufnahmenuten unterbrochen. Es wird eine optimale Führungsfläche bereitgestellt, welche auf der Montagebewegung der motorisierten Förderrolle in radialer Richtung relativ zum Rahmenprofil zur Anlage an das Rahmenprofil gelangt. Dadurch wird gegenüber solchen aus dem Stand der Technik bekannten Förderrollen mit Lagervorrichtung, bei der Montage zwischen den Rahmenprofilen das Problem von Verkantungen vermieden. All diese Maßnahmen erlauben eine besonders rasche Montage einer motorisierten Förderrolle an den Rahmenprofilen. Sohin können durch einen Störungsfall verursachte Stillstandszeiten der Förderanlage, wenn eine motorisierte Förderrolle defekt ist und ausgewechselt werden muss, besonders gering gehalten werden.

Von Vorteil ist auch die Ausgestaltung nach dem Ansprüch 2, da die Rollenachse in ihrem Achsquerschnitt nicht durch Bohrungen geschwächt ist, durch welche Verbindungsleitungen zum Anschluss der Antriebselektronik an das Bussystem gefädelt werden müssen, und damit die Förderrolle bei sehr kompakter Bauweise hohe Tragkräfte aufnehmen kann.

Gemäß der Ausgestaltung nach Anspruch 3 ist eine einfache Montage bzw. Demontage der motorisierten Förderrolle an den Rahmenprofilen über die Lagervorrichtungen möglich.

Vorteilhaft ist auch die Ausgestaltung nach Anspruch 4, da die Lagervorrichtung nicht nur die Lagerfunktion der Rollenachse an einem der Rahmenprofile übernimmt, sondern zusätzlich die Antriebselektronik trägt.

Mit der Ausgestaltung nach dem Ansprüch 5 wird über die Lagervorrichtung(en) einerseits eine verdrehgesicherte Lagerung der Rollenachse im Rahmenprofil bzw. in den Rahmenprofilen sichergestellt und andererseits die motorisierte Förderrolle in senkrechter Richtung gegen Verlagerungsbewegungen fixiert gehalten.

Ein zuverlässiger, verriegelnder Eingriff zwischen der Rastnase und der Lageraufnahme wird durch die Ausgestaltung nach Anspruch 6 erreicht.

Von Vorteil ist auch die Weiterbildung nach Anspruch 7, wonach zum Übertrieb eines Antriebsmomentes von der motorisierten Förderrolle auf eine nicht angetriebene Förderrolle zusätzlich eine Übertriebsscheibe vorgesehen ist, welche an einer der Stirnseiten des Rollenmantels angeordnet wird. Bislang war nach dem bekannten Stand der Technik der Rollenmantel mit einer umlaufenden Rille versehen, welche durch Kaltumformung in den Rollenmantel eingeformt wurde. Die bei der Herstellung der Rille auftretenden Bearbeitungskräfte wirken sich nachteilig auf die Formgenauigkeit des Rollenmantels aus und weisen solche Förderrollen nur eine relativ geringe Rundlaufgenauigkeit auf. Bedingt durch die Abweichungen im Rundlauf, wird der um die motorisierte Förderrolle und eine benachbarte, freilaufende Förderrolle umlaufende Riemen einer wechselnden Beanspruchung ausgesetzt. Da gemäß der Erfindung der Rollenmantel keine umlaufende Rille aufweist, wird ein besserer Rundlauf der Förderrolle und eine bessere Übertragung eines Antriebsmomentes von der Förderrolle auf das zu transportierende Fördergut erreicht.

Gemäß einer Weiterbildung nach Anspruch 8 können durch eine auf den Rollenmantel aufgetragene Beschichtung mehrere Anforderungen an die Funktionalität der motorisierten Förderrolle erfüllt werden. Durch geeignete Materialwahl der Beschichtung lässt sich ein besonders geräuscharmer Transport der Fördergüter entlang der Förderanlage erreichen. Andererseits kann der Reibschluss zwischen der Förderoberfläche an der Förderrolle und dem zu transportierenden Fördergut verbessert werden, wenn die Beschichtung aus einem Material gewählt wird, welches einen hohen Reibwert aufweist. Der innerhalb des Rollenkörpers angeordnete Antriebsmotor führt im Betrieb zu einer Erwärmung des Rollenmantels, sodass es auch durchaus von Vorteil sein kann, wenn die Beschichtung durch eine Wärmeisolationsschicht gebildet ist und damit das zu transportierende Fördergut nicht durch die Wärmeabgabe des Antriebsmotors bedingte Überhitzungen oder Verbrennungen durch Berührung beschädigt wird. Somit kann die Wahl der Beschichtung abhängig vom Anwendungsgebiet der Förderanlage erfolgen.

Gemäß einer Weiterbildung nach Anspruch 9 ist die Förderrolle als Konusrolle ausgebildet und kann damit ein Kurvenförderer hergestellt werden.

Eine vorteilhafte Ausgestaltung der Erfindung ist auch im Anspruch 10 beschrieben, da das Einsatzgebiet der Förderanlage auch auf den Gefrier- und Tiefkühlbereich ausgeweitet werden kann und sichergestellt wird, dass im Kontaktierungsbereich (Anschlussbereich) zwischen der Kontaktierungsvorrichtung und dem Bussystem eine zuverlässige Abdichtung vorgesehen ist. Damit ist auch die elektrische Anschlussverbindung im Kontaktierungsbereich vor Verschmutzung oder Feuchtigkeit geschützt und werden Störungen durch Oxidation der Kontaktelemente und in Folge Kurzschlüsse vermieden und ein zuverlässiger Betrieb der Förderanlage sichergestellt.

Vorteilhaft sind auch die Ausgestaltungen nach den Ansprüchen 11 bis 13, da ein geringfügiger Höhenversatz zwischen der oberen Scheitellinie einer jeden Förderrolle und einer Förderebene alleinig durch die Gewichtskraft des auf mehreren Förderrollen auflastenden Fördergutes ausgeglichen werden kann. Somit können auch gegen Erschütterungen besonders empfindliche Fördergüter relativ ruckfrei entlang der Förderanlage transportiert werden.

Gemäß einer Ausführungsform, die nicht Teil der Erfindung ist, wird mit der Montagebewegung in radialer Richtung zum Rollenkörper gleichzeitig der elektrische Kontakt zwischen dem Bussystem und der Antriebselektronik hergestellt. Es ist üblich ein solches Bussystem über weite Teile des Transportweges entlang der Förderanlage zu verlegen und können beachtliche Längen, beispielsweise bis zu 50 m erreichen. Nach dieser Ausführungsform wird das Bussystem am Rahmen der Förderanlage verlegt und relativ zum Rahmen fixiert, bevor die Förderrolle am Rahmen montiert wird. Dies ist insofern von Vorteil, als das Bussystem bei der Montage der Förderrolle und Anschluss der Kontaktierungsvorrichtung an das Bussystem nicht vom Monteur gehalten, positioniert sowie mit den Kontaktelementen elektrisch verbunden werden muss. Somit wird gegenüber der aus dem Stand der Technik bekannten Anschlusstechnik eine weitaus einfachere Installierung der motorisierten Förderrolle ermöglicht. Mittels der Kontaktierungsvorrichtung können mehrere elektrische Anschlüsse gleichzeitig hergestellt und wieder getrennt werden. Die Kontaktierungsvorrichtung ist vorteilhaft also derart ausgebildet, dass der elektrische Anschluss der motorisierten Förderrolle ohne spezielles Werkzeug erfolgen kann.

Sind besonders lange Busleitungen erforderlich, ist es von Vorteil, wenn der Tragkörper zumindest abschnittsweise von einer Trägerschiene fixiert gehalten wird.

Aus der EP 1 590 275 B 1 ist bekannt, dass die Antriebssteuerungen der Antriebe eines Rollenförderers über ein Bussystem angesteuert werden können. Mit Hilfe einer Selbstadressierungsleitung können den Antriebssteuerungen aufsteigende Adressen entsprechend der Reihenfolge der Antriebe im Rollenförderer zugewiesen werden. Dazu werden die Antriebssteuerungen über die Selbstadressierungsleitung nach Art einer "daisy chain" verbunden und die Antriebssteuerungen in einen Grundzustand versetzt, in dem ein an die Selbstadressierungsleitung angelegtes Signal von den Antriebssteuerungen nicht weitergeleitet wird. Zu Beginn empfängt daher nur eine Antriebssteuerung das in die Selbstadressierungsleitung eingespeiste Signal und meldet sich daraufhin bei einer zentralen Steuerung, welche der Antriebssteuerung eine neue Adresse zuweist und die Antriebssteuerung in einen Zustand steuert, in dem das an die Selbstadressierungsleitung angelegte Signal von der besagten Antriebssteuerung weitergeleitet wird. Nunmehr empfängt eine zweite Antriebssteuerung das Signal und meldet sich ebenfalls bei der zentralen Steuerung. Diese Abfolge wird so lange wiederholt, bis alle Antriebssteuerungen eine entsprechende Adresse erhalten haben. Zwar ermöglicht die EP 1 590 275 B1 prinzipiell eine automatische Adresszuweisung in einem Rollenförderer, lehrt aber nicht, wie die Grundlage, das heißt die elektrische Verdrahtung, für eine solche Adresszuteilung auf einfache Weise hergestellt werden kann.

Ein Aspekt einer möglichen Verbesserung der Förderanlage der Erfindung ist es daher, eine Förderanlage oder einen Förderabschnitt derselben anzugeben, bei der oder dem eine Verdrahtung auf einfache Weise erfolgen kann.

Diese Aufgabe kann durch eine Ausführungsform, die nicht Teil der beanspruchten Erfindung gelöst werden. Von Vorteil ist, dass auf einfache Weise die elektrische Verdrahtung einer Förderanlage hergestellt werden kann. Dabei wirken an sich bekannte Kontaktelemente, insbesondere Schneidklemmkontakte oder Piercing-Kontakte, derart mit einer Trennschneide zusammen, dass sowohl die für den elektrischen Anschluss einer Antriebselektronik nötigen Kontaktierungen als auch die Durchtrennung einer der Leitungen, insbesondere einer Initialisierungsleitung, in einem einzigen Arbeitschritt erfolgt, welcher im Zuge einer Montagebewegung einer Förderrolle relativ zu einem Rahmen der Förderanlage erfolgt. Ein separates Kontaktieren der Versorgungsleitung, Kontaktieren der Datenleitung, Auftrennen einer der Leitungen, insbesondere der Initialisierungsleitung, Abisolieren der Enden der Leitung, insbesondere der Initialisierungsleitung, und ein Verbinden der abisolierten Enden mit der Antriebselektronik kann somit entfallen. Die elektrische Verbindung einer Antriebselektronik kann somit schneller erfolgen und ist noch dazu weniger fehleranfällig. Insbesondere kann die elektrische Verbindung auch von weniger geschultem Personal durchgeführt werden, da hierfür keine handwerklichen Fähigkeiten auf dem Gebiet der Elektrotechnik nötig sind.

Zum besseren Verständnis der Erfindung wird diese anhand der nachfolgenden Figuren näher erläutert.

Es zeigen jeweils in stark schematisch vereinfachter Darstellung:
- Fig. 1: eine Draufsicht auf eine erfindungsgemäße Förderanlage;
- Fig. 2: ein Rahmenprofil der Förderanlage in Stirnansicht geschnitten;
- Fig. 3: das Rahmenprofil gemäß Fig. 2 in Seitenansicht;
- Fig. 4: das Rahmenprofil gemäß Fig. 2 in Draufsicht;
- Fig. 5: eine erste Ausführungsform einer motorisierten Förderrolle mit einer ersten Ausführung für die Befestigung des Bussystems am Rahmen, im Längsschnitt;
- Fig. 5a: eine Ausschnittsvergrößerung der Förderrolle aus Fig. 5 mit einer ersten Lagervorrichtung, einer Kontaktierungsvorrichtung und einem Bussystem;
- Fig. 5b: eine Ausschnittsvergrößerung der Förderrolle aus Fig. 5 mit einer zweiten Lagervorrichtung;
- Fig. 6: die erste Lagervorrichtung im Längsschnitt;
- Fig. 7: die erste Lagervorrichtung gemäß Fig. 6 in Stirnansicht;
- Fig. 8: die erste Lagervorrichtung gemäß Fig. 6 in Draufsicht;
- Fig. 9: die zweite Lagervorrichtung im Längsschnitt;
- Fig. 10: die zweite Lagervorrichtung gemäß Fig. 9 in Stirnansicht;
- Fig. 11: die zweite Lagervorrichtung gemäß Fig. 9 in Draufsicht;
- Fig. 12: einen Teilausschnitt einer motorisierten Förderrolle mit einer zweiten Ausführung für die Befestigung des Bussystems am Rahmen;
- Fig. 13: eine Draufsicht auf einen Anschlussbereich einer motorisierten Förderrolle an das Bussystem;
- Fig. 14: eine Anschlussverbindung der Kontaktierungsvorrichtung an eine Verbindungsleitung für seriell miteinander verbundener Schalter von motorisierten Förderrollen;
- Fig. 14a: eine Ausschnittsvergrößerung aus Fig. 14;
- Fig. 15: ist eine zweite Ausführungsform einer motorisierten Förderrolle im Längsschnitt;
- Fig. 15a: eine Ausschnittsvergrößerung aus Fig. 15;
- Fig. 16: eine dritte Ausführungsform einer motorisierten Förderrolle als Konusrolle in einem Kurvenförderer, im Längsschnitt;
- Fig. 16a: eine Ausschnittsvergrößerung aus Fig. 16;
- Fig. 17: eine vierte Ausführung einer motorisierten Förderrolle, im Längsschnitt;
- Fig. 18: ein Teilabschnitt einer motorisierten Förderrolle mit einer ersten Ausführung einer Ausgleichsvorrichtung zur Lagerung der Förderrolle an den Profilrahmen;
- Fig. 19: ein Teilabschnitt einer motorisierten Förderrolle mit einer zweiten Ausführung einer Ausgleichsvorrichtung zur Lagerung der Förderrolle an den Profilrahmen.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

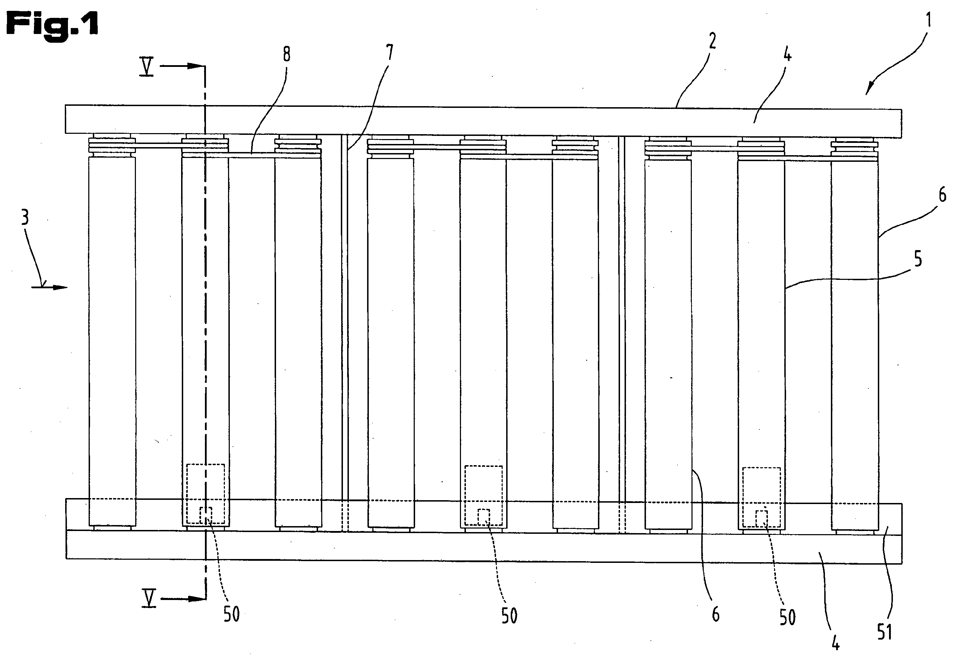

In Fig. 1 ist ein Ausschnitt aus einer Förderanlage 1 bzw. einem Rollenförderer zum Fördern von Fördergut, beispielsweise Behälter, in Draufsicht gezeigt. Die Förderanlage 1 umfasst einen Rahmen 2 mit in Förderrichtung 3 parallel verlaufenden Rahmenprofilen 4 und Förderrollen 5, 6, wovon die Förderrollen 5 mit einem noch näher zu beschreibenden Antriebsmotor ausgestattet und die Förderrolle 6 als frei drehbare Tragrollen ausgebildet sind. Die Rahmenprofile 4 sind über mehrere Querträger 7 verbunden und somit auf Abstand gehalten. Die Rahmenprofile 4 und Querträger 7 bilden den Rahmen 2 der Förderanlage 1. Nach gezeigter Ausführung ist eine motorisierte Förderrollen 5 mittels Zugmittel 8, insbesondere Riemen, mit einer in Förderrichtung 3 vorgeordneten und nachgeordneten freilaufenden Förderrolle 6 verbunden. Nach einer anderen, nicht gezeigten Ausführung ist eine motorisierte Förderrolle 5 mittels einem Zugmittel 8 mit nur einer in Förderrichtung 3 vorgeordneten oder nachgeordneten freilaufenden Förderrolle 6 verbunden. Andererseits kann die Förderanlage 1 ausschließlich motorisierte Förderrollen 5 umfassen.

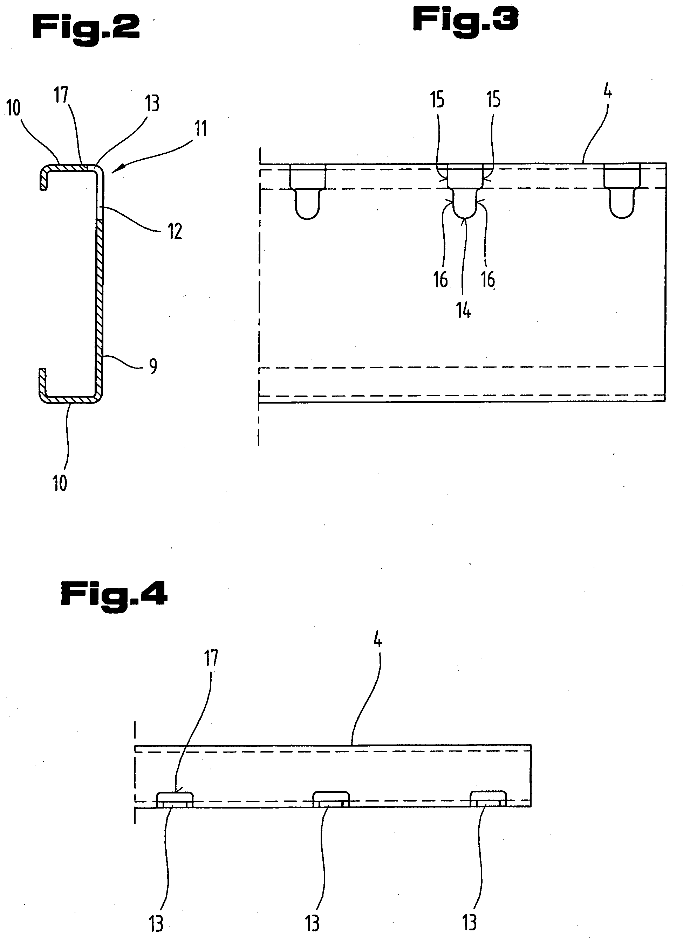

Die Rahmenprofile 4 (Fig. 2 bis 4) sind beispielsweise in Form von C-förmigen Metallprofilen ausgebildet und weisen einen vertikalen Profilsteg 9 und an diesem vorzugsweise senkrecht vorragende, voneinander weggerichtete Profilschenkel 10 auf. Die Rahmenprofile 4 sind in ihrem oberen Bereich mit paarweise gegenüberliegenden und in dessen Längserstreckung mit Abstand angeordneten Lageraufnahmen 11 versehen. Jede Lageraufnahme 11 weist einen Führungsabschnitt 12 und eine an diesen angrenzende Einschuböffnung 13 auf.

Der Führungsabschnitt 12 ist über die gesamte Wandstärke des Rahmenprofils 4 angeordnet und erstreckt sich von einer oberen Längskante zwischen dem oberen Profilschenkel 10 und dem Profilsteg 9 in Richtung einer unteren Längskante zwischen dem unteren Profilschenkel 10 und dem Profilsteg 9. Das untere Ende des Führungsabschnittes 12 bildet eine Stützfläche 14 aus, gegen die eine noch näher zu beschreibende Lagervorrichtung angelegt wird. Der Führungsabschnitt 12 weist in dessen Längsrichtung parallel zueinander verlaufende erste Führungsflächen 15 und parallel zueinander verlaufende zweite Führungsflächen 16 auf, die mit unterschiedlichem Abstand zueinander angeordnet sind. Die Stützfläche 14 verbindet die zweiten Führungsflächen 16 und ist nach gezeigter Ausführung bogenförmig ausgebildet.

Die Einschuböffnung 13 ist über die gesamte Wandstärke des Rahmenprofils 4 angeordnet und erstreckt sich von der oberen Längskante mit einer Tiefe bis in den oberen Profilschenkel 10 hinein. Die Einschuböffnung 13 ist in der Tiefe durch einen Führungsrand 17 begrenzt.

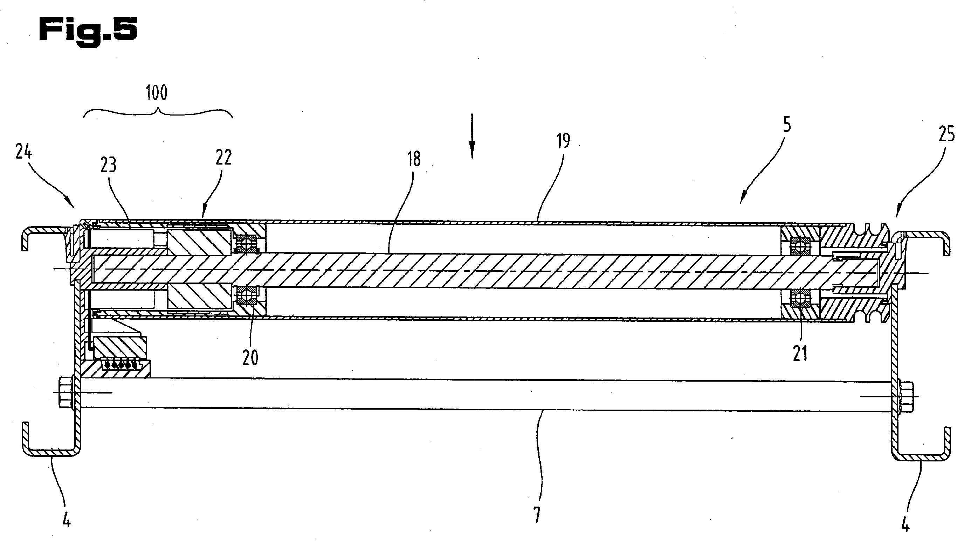

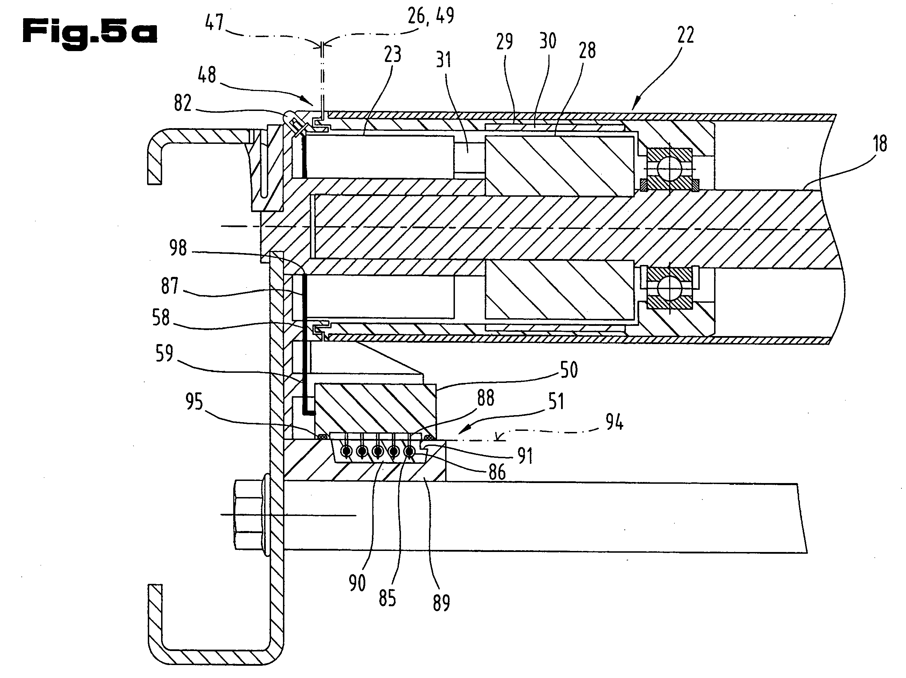

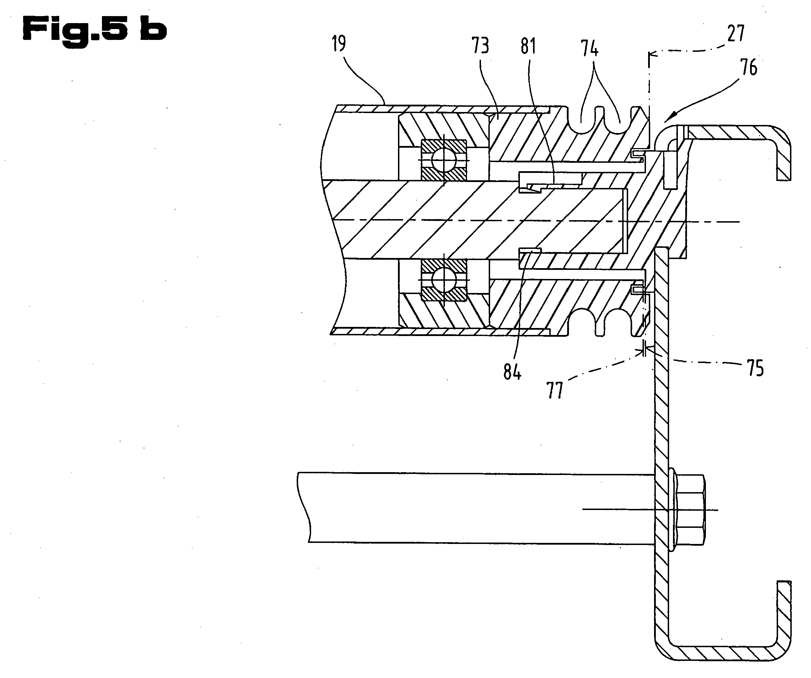

In den Fig. 5, 5a und 5b ist eine motorisierte Förderrolle 5 in montiertem Zustand gezeigt. Die Förderrolle 5 umfasst eine Rollenachse 18, einen hohlzylindrischen Rollenkörper 19, ein erstes Lager 20, ein zweites Lager 21, einen elektrischen Antriebsmotor 22, eine Antriebselektronik 23 zur Regelung und/oder Steuerung des Antriebsmotors 22 und an den gegenüberliegenden Enden des Rollenkörpers 19 Lagervorrichtungen 24, 25. Der Rollenkörper 19 weist zumindest einen zylindrischen Rollenmantel auf. Die motorisierte Förderrolle 5 ist über die Lagervorrichtungen 24, 25 auswechselbar an den Rahmenprofilen 4 gelagert. Der Antriebsmotor 22 und die Antriebselektronik 23 sind innerhalb des Rollenkörpers 19 angeordnet, wie noch genauer beschrieben wird. Der Rollenkörper 19 ist in der Länge durch eine erste Stirnseite 26 und zweite Stirnseite 27 begrenzt und auf der feststehenden Rollenachse 18 über die Lager 20, 21 drehbar gelagert. Die Lager 20, 21 sind beispielsweise durch Wälzlager gebildet.

Der Antriebsmotor 22 ist durch einen elektronisch kommutierten, bürstenlosen dreiphasigen Gleichstrommotor gebildet, welcher einen auf der Rollenachse 18 (formschlüssig) befestigten Stator 28 und einen um diesen angeordneten Rotor 29 umfasst. Zwischen Stator 28 und Rotor 29 ist ein Luftspalt ausgebildet. Der Stator 28 weist nicht gezeigte Statorblechpakete mit beispielsweise sechs Wicklungen auf. Die Wicklungen werden von der Antriebselektronik 23 mit einer Gleichspannung von kleiner 50 VDC (Schutzkleinspannung), insbesondere 24 VDC oder 48VDC, gespeist. Die Wickeldrähte der Wicklungen werden über eine an sich bekannte Klemmvorrichtung, insbesondere einen Schneidklemmkontakt (nicht dargestellt), oder durch eine Fügeverbindung zusammen verschaltet.

Der Rotor 29 (Außenläufer) weist beispielsweise 14 Permanentmagnete 30 auf, die mit dem Rohrkörper 18 verbunden sind. Die Permanentmagnete 30 sind nach gezeigter Ausführung in einer Vertiefungsnut an einem rohrförmigen Tragkörper befestigt, welcher mit dem Rohrkörper 18 fest verbunden ist. Der Tragkörper ist vorzugsweise aus elastisch verformbarem Material, beispielsweise Kunststoff, hergestellt, sodass durch die Elastizität des Materials Formungenauigkeiten des Rollenmantels an der inneren Umfangsfläche ausgeglichen werden können, wenn der Tragkörper in den Rollenmantel eingepresst ist. Dadurch kann eine spanabhebende Nachbearbeitung der inneren Umfangsfläche des Rollenmantels entfallen und die Förderrolle 5 kostengünstig hergestellt werden. Der Rohrkörper 18 kann als Rückschlussrohr des Antriebsmotors 22 verwendet werden. Der Rotor 29 kann infolge der von den Wicklungen erzeugten Magnetkräfte frei um den Stator 28 drehen. Der Antriebsmotor 22 bzw. die elektrische Maschine ist demnach als Außenläufermotor ausgebildet.

Die Antriebselektronik 23 und die Wicklungen des Stators 28 sind über einen Anschlussstecker 31 elektrisch miteinander verbunden.

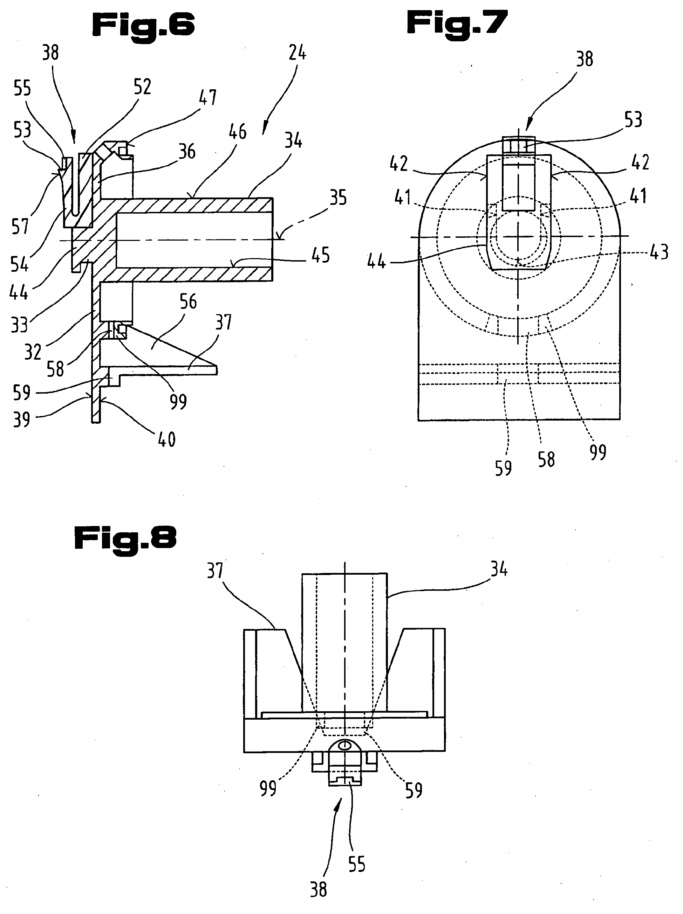

In den gemeinsam beschriebenen Fig. 6 bis 8 ist die erste Lagervorrichtung 24 in unterschiedlichen Ansichten gezeigt. Die Lagervorrichtung 24 umfasst einen aus der Außenkontur des Rollenkörpers 19 herausragenden, plattenförmigen Lagerkörper 32, einen Führungsteil 33, eine Lagerbuchse 34, einen koaxial zur Achse 35 der Lagerbuchse 34 angeordneten, zylindrischen Lagerbund 36, eine am Lagerkörper 32 vorgesehene Halterung 37 und/oder eine Verriegelungsvorrichtung 38. Der Lagerkörper 32 bildet eine an die Innenseite des ersten Rahmenprofils 4 bzw. Profilsteges 9 anlegbare Außenfläche 39 und eine dieser gegenüberliegende Innenfläche 40 aus. Die Außenfläche 39 dient als Lagerfläche.

Eine verdrehgesicherte Aufnahme der Rollenachse 18 im ersten Rahmenprofil 4 wird durch eine Formschlussverbindung zwischen dem Führungsteil 33 und der Lageraufnahme 11 erreicht. Der Führungsteil 33 ragt an der Außenfläche 39 vor und weist parallel zueinander verlaufende, erste Führungsflächen 41 und parallel zueinander verlaufende zweite Führungsflächen 42 auf, die mit unterschiedlichem Abstand zueinander angeordnet sind. Eine Stützfläche 43 verbindet die zweiten Führungsflächen 42 und ist komplementär zur Stützfläche 14 des Führungsabschnittes 12 der Lageraufnahme 11, beispielsweise bogenförmig ausgebildet. Zur axialen Fixierung der ersten Lagervorrichtung 24 relativ zum ersten Rahmenprofil 4, weist der Führungsteil 33 zusätzlich ein den Führungsabschnitt 12 im Rahmenprofil 4 abschnittsweise hintergreifendes Formelement 44 auf.

Die Lagerbuchse 34 ragt an der Innenfläche 40 vor und weist eine koaxial zur Achse 35 angeordnete, zylindrische Lagerbohrung 45 auf, in welche ein erstes Ende der Rollenachse 18 eingesteckt wird. Die erste Lagervorrichtung 24 kann ferner eine Aufnahme 46 aufweisen, welche der Befestigung der Antriebselektronik 23 dient, und vorzugsweise von der Lagerbuchse 34 ausgebildet wird.

Der koaxial zur Achse 35 angeordnete Lagerbund 36 ragt an der Innenfläche 40 vor und ist durch einen umlaufenden Ringsteg gebildet, welcher eine profilierte, erste Begrenzungsfläche 47 einer in Fig. 5a dargestellten Dichtung 48 zwischen der ersten Lagervorrichtung 24 und dem Rollenkörper 19 ausbildet. Nach gezeigtem Ausführungsbeispiel ist die Begrenzungsfläche 47 an der vorragenden Stirnseite des Ringstegs ausgebildet und weist konzentrisch um die Achse 35 in Umfangsrichtung verlaufende Dichtstege und eine zwischen diesen begrenzende Dichtungsnut (Ringraum) auf. Andererseits kann die Begrenzungsfläche 47 auch an der Umfangsfläche des Ringstegs ausgebildet sein. Der Rollenkörper 19 bildet eine der ersten Begrenzungsfläche 47 zugewandte profilierte, zweite Begrenzungsfläche 49 aus. Die Begrenzungsflächen 47, 49 greifen mit einem geringen Abstand dichtend ineinander. Nach gezeigtem Ausführungsbeispiel ist die Begrenzungsfläche 49 an der Stirnseite 26 des Rollenkörpers 19 ausgebildet und weist einen konzentrisch um die Rollenachse 18 in Umfangsrichtung verlaufenden Dichtsteg auf, der in die Dichtungsnut der ersten Begrenzungsfläche 47 vorragt. Auf diese Weise wird zwischen der ersten Lagervorrichtung 24 und dem Rollenkörper 19 eine Labyrinthdichtung ausgebildet. Im Lagerbund 36 ist auch eine Aufnahme, beispielsweise eine Bohrung, für eine LED vorgesehen.

Ferner ist die erste Lagervorrichtung 24, vorzugsweise an ihrem Lagerbund 36 mit einer in radialer Richtung zur Rollenachse 18 und von einer vorragenden Stirnseite des Lagerbundes 36 mit einer begrenzten Tiefe in Richtung des Lagerkörpers 32 verlaufenden (nutartigen) Aussparung 58 versehen, durch welche ein noch näher zu beschreibendes Leitungssystem hindurchgeführt wird. Eine Breite der Aussparung 58 wird auf die Breite des Leitungssystems abgestimmt. Demnach grenzt die Aussparung 58 nicht an die Außenfläche 39 an, sondern ist von dieser getrennt ausgebildet. Damit die Dichtungsfunktion erhalten bleibt, wird wie in Fig. 6 bis 8 ersichtlich, in die Aussparung 58 ein Dichtungssegment 99 fest eingesetzt, wobei dessen Höhe geringer ausgebildet ist als die Tiefe der Aussparung 58, sodass in dem verbleibenden Freiraum das Leitungssystem angeordnet werden kann.

Die Halterung 37 ist durch eine Konsole gebildet und ragt an der Innenfläche 40 vor, an der eine Kontaktierungsvorrichtung 50 zum Anschluss an ein, in Fig. 5a näher dargestelltes Bussystem 51 befestigt ist. Ferner kann die erste Lagervorrichtung 24 eine zwischen der Halterung 37 und dem Lagerkörper 32 angeordnete Versteifungsrippe 56 umfassen, damit eine zuverlässige Kontaktierung zwischen der Kontaktierungsvorrichtung 50 und dem ortsfest angebrachten Bussystem 51 erfolgen kann, wie noch näher beschrieben wird. Ferner ist die erste Lagervorrichtung 24, vorzugsweise an ihrer Halterung 37 mit einer in radialer Richtung zur Rollenachse 18 und sich von einer vorragenden Stirnseite der Halterung 37 mit einer begrenzten Tiefe in Richtung des Lagerkörpers 32 verlaufenden (nutartigen) Aussparung 59 versehen, durch welche ein noch näher zu beschreibendes Leitungssystem geführt wird. Eine Breite der Aussparung 58 wird auf die Breite des Leitungssystems abgestimmt. Demnach grenzt die Aussparung 59 nicht an die Außenfläche 39 an, sondern ist von dieser getrennt ausgebildet. Durch die genannte Ausgestaltung der Aussparungen 58, 59 ist es möglich, dass das auf einer Trägerplatine angeordnete Leitungssystem von einer Fertigungsmaschine automatisch auf die erste Lagervorrichtung 24 montiert und an dieser befestigt werden kann, sodass die erste Lagervorrichtung 24 und das Leitungssystem eine Baueinheit bilden. Die Trägerplatine weist eine Ausnehmung 98 auf, durch welche die Lagerbuchse 34 hindurch gesteckt wird. Die Antriebselektronik 23 kann ebenso auf der Trägerplatine befestigt werden.

Die Verriegelungsvorrichtung 38 weist einen Grundkörper 52 und eine relativ zum Lagerkörper 32 verstellbare Rastnase 53 bzw. Verriegelungsschulter auf. Die Rastnase 53 bildet eine in Montagerichtung der Förderrolle 5 - gemäß eingetragenem Pfeil in Fig. 5 - verjüngende äußere Schrägfläche 57 aus. Nach gezeigter Ausführung ist die Rastnase 53 über eine elastische Federzunge 54 mit dem Grundkörper 52 verbunden. Zum Lösen der Verriegelungsvorrichtung 38 und zum Auswechseln der Förderrolle 5 ist am freien Ende der Federzunge 54 eine Aussparung 55 ausgeformt, welche zur Aufnahme eines geeigneten Werkzeuges (nicht dargestellt) bestimmt ist.

Die erste Lagervorrichtung 24 ist mit Ausnahme der Verriegelungsvorrichtung 38 aus einem wärmeleitenden Material, insbesondere Metall, beispielsweise eine Aluminiumlegierung, einstückig hergestellt. Die Verriegelungsvorrichtung 38 ist hingegen aus einem elastisch verformbaren Material, beispielsweise Kunststoff, einstückig geformt.

Dies hat den Vorteil, dass die durch den Antriebsmotor 22 im Betrieb entwickelte Verlustwärme von der ersten Lagervorrichtung 24 über die in der Montagestellung der Förderrolle 5 an das Rahmenprofil 4 angelegte Außenfläche 39 auf das Rahmenprofil 4 übertragen werden kann. Da die Rahmenprofile 4 aus metallischem Werkstoff gefertigt sind und die Außenfläche 39 der Förderrolle 5 mit dem Rahmenprofil 4 wärmetechnisch verbunden ist, wirkt das Rahmenprofil 4 für die Förderrolle 5 als ein großer Kühlkörper.

Wie in den Fig. 5 und 5a dargestellt, ist die erste Lagervorrichtung 24 über die Lagerbohrung 45 auf das erste Ende der Rollenachse 18 aufgeschoben und über zumindest ein (nicht dargestelltes) Sicherungselement in axialer Richtung auf der Rollenachse 18 fixiert gehalten und/oder gegen Verdrehung gesichert.

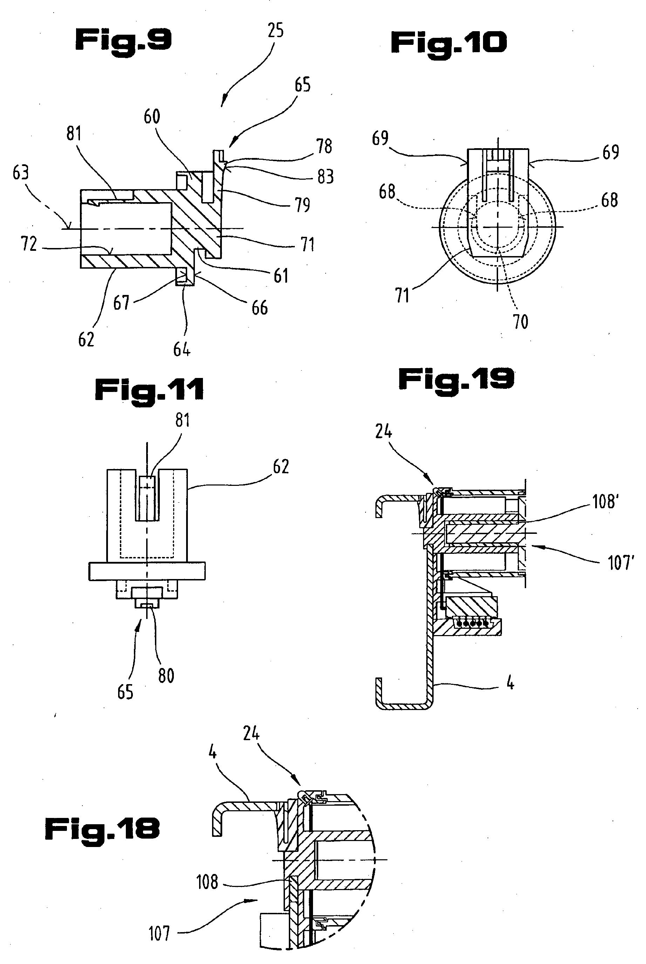

In den gemeinsam beschriebenen Fig. 9 bis 11 ist die zweite Lagervorrichtung 25 in unterschiedlichen Ansichten gezeigt. Die Lagervorrichtung 25 umfasst plattenförmigen Lagerkörper 60, einen Führungsteil 61, eine Lagerbuchse 62, einen koaxial zur Achse 63 der Lagerbuchse 62 angeordneten, zylindrischen Lagerbund 64 und eine Verriegelungsvorrichtung 65. Der Lagerkörper 32 bildet eine an die Innenseite des zweiten Rahmenprofils 4 bzw. Profilsteges 9 anlegbare Außenfläche 66 und eine dieser gegenüberliegende Innenfläche 67 aus. Die Außenfläche 66 dient als Lagerfläche.

Eine verdrehgesicherte Aufnahme der Rollenachse 18 im zweiten Rahmenprofil 4 wird durch eine Formschlussverbindung zwischen dem Führungsteil 61 und der Lageraufnahme 11 erreicht. Der Führungsteil 61 ragt an der Außenfläche 66 vor und weist parallel zueinander verlaufende, erste Führungsflächen 68 und parallel zueinander verlaufende zweite Führungsflächen 69 auf, die mit unterschiedlichem Abstand zueinander angeordnet sind. Eine Stützfläche 70 verbindet die zweiten Führungsflächen 69 und ist komplementär zur Stützfläche 14 des Führungsabschnittes 12 der Lageraufnahme 11, beispielsweise bogenförmig ausgebildet. Zur axialen Fixierung der zweiten Lagervorrichtung 24 relativ zum zweiten Rahmenprofil 4, weist der Führungsteil 61 zusätzlich ein den Führungsabschnitt 12 im Rahmenprofil 4 abschnittsweise hintergreifendes Formelement 71 auf.

Die Lagerbuchse 62 ragt an der Innenfläche 67 vor und weist eine koaxial zur Achse 63 angeordnete, zylindrische Lagerbohrung 72 auf, in welche ein zweites Ende der Rollenachse 18 eingesteckt wird.

Wie in Fig. 5b dargestellt, kann der Rollenkörper 19 der motorisierten Förderrolle 5 auch mit einer Übertriebsscheibe 73 versehen sein, die an einer seiner Stirnseiten des zylindrischen Rollenmantels angeordnet ist. Die Übertriebsscheibe 73 weist beispielsweise zwei umlaufende Rillen 74 auf, in denen in Fig. 1 schematisch dargestellte Zugmittel 8 geführt sind, die mit zwei benachbarten, frei drehbaren Förderrollen 6 gekuppelt sind.

Der koaxial zur Achse 63 angeordnete Lagerbund 64 ragt an der Innenfläche 67 vor und bildet die profilierte, erste Begrenzungsfläche 75 einer in Fig. 5b dargestellten Dichtung 76 zwischen der zweiten Lagervorrichtung 25 und dem Rollenkörper 19 aus.

Nach gezeigtem Ausführungsbeispiel weist die Begrenzungsfläche 75 einen konzentrisch um die Achse 63 in Umfangsrichtung verlaufenden Dichtsteg auf. Andererseits kann die Begrenzungsfläche 75 auch an der Umfangsfläche des Rollenkörpers 19 ausgebildet sein. Der Rollenkörper 19 bzw. die Übertriebsscheibe 73 bildet eine der ersten Begrenzungsfläche 75 zugewandte profilierte, zweite Begrenzungsfläche 77 aus. Die Begrenzungsflächen 75, 77 greifen mit einem geringen Abstand dichtend ineinander.

Nach gezeigtem Ausführungsbeispiel ist die Begrenzungsfläche 77 an der Stirnseite 27 des Rollenkörpers 19 ausgebildet und weist konzentrisch um die Rollenachse 18 in Umfangsrichtung verlaufenden Dichtstege und eine zwischen diesen begrenzende Dichtungsnut (Ringraum) auf. Der Dichtsteg der Begrenzungsfläche 75 ragt in die Dichtungsnut der zweiten Begrenzungsfläche 77 vor. Auf diese Weise wird zwischen der zweiten Lagervorrichtung 25 und dem Rollenkörper 19 bzw. der Übertriebsscheibe 73 eine Labyrinthdichtung ausgebildet.

Die Verriegelungsvorrichtung 65 weist eine relativ zum Lagerkörper 60 verstellbare Rastnase 78 bzw. Verriegelungsschulter auf. Die Rastnase 78 bildet eine in Montagerichtung der Förderrolle 5 - gemäß eingetragenem Pfeil in Fig. 5 - verjüngende äußere Schrägfläche 83 aus. Nach gezeigter Ausführung ist die Rastnase 78 über eine elastische Federzunge 79 mit dem Lagerkörper 60 verbunden. Zum Lösen der Verriegelungsvorrichtung 65 und zum Auswechseln der Förderrolle 5 ist am freien Ende der Federzunge 79 eine Aussparung 80 ausgeformt, welche zur Aufnahme eines geeigneten Werkzeuges (nicht dargestellt) bestimmt ist.

Wie in den Fig. 5b, 9 bis 11 dargestellt, ist die zweite Lagervorrichtung 25 über die Lagerbohrung 72 auf das zweite Ende der Rollenachse 18 aufgeschoben und über zumindest ein Sicherungselement 81 in axialer Richtung auf der Rollenachse 18 fixiert gehalten und/oder gegen Verdrehung gesichert. Das Sicherungselement 81 ist beispielsweise durch elastische Federzunge gebildet, die an ihrem freien Ende eine Rastnase aufweist, welche in eine umlaufende Nut 84 in der Rollenachse 18 formschlüssig eingreift.

Die zweite Lagervorrichtung 24 ist aus einem elastisch verformbaren Material, beispielsweise Kunststoff, einstückig geformt.

Es sei an dieser Stelle darauf hingewiesen, dass die zweite Lagervorrichtung 25 nicht zwingend erforderlich ist. Genauso gut kann das zweite Ende der Rollenachse 18 direkt von oben in die Lageraufnahme 11 eingesetzt und mittels eines Niederhalters gesichert werden, wie nicht weiters dargestellt.

Wie anhand der Fig. 5a beschrieben, ist die Antriebselektronik 23 auf der ersten Lagervorrichtung 24 befestigt, welche von einer übergeordneten (nicht dargestellten) Steuerung angesteuert werden kann. Zur Ansteuerung wird vorzugsweise ein serielles Bussystem 51 verwendet. Die Antriebselektronik 23 weist eine Elektronikstromversorgung, Leistungselektronik zur Speisung des elektrischen Antriebsmotors 22, eine Regelungsvorrichtung zur Regelung des elektrischen Antriebsmotors 22, eine Kommunikationsvorrichtung und/oder eine Diagnosevorrichtung 82 auf. Die Diagnosevorrichtung 82 dient der Anzeige von Systemzuständen und weist eine optische Anzeigevorrichtung, beispielsweise eine LED auf. Das Anzeigeelement ist hierzu in einer Aufnahme in der ersten Lagervorrichtung 24 angeordnet. Die Kommunikationsvorrichtung ist an einen Datenbus angeschlossen und die Elektronikstromversorgung, Leistungselektronik, Regelungsvorrichtung und/oder Diagnosevorrichtung 82 sind an einen Leistungsbus angeschlossen.

Das Bussystem 51 ist entlang der Förderanlage 1 in einer horizontalen oder geneigten Ebene unterhalb der Förderrollen 5, 6 (Fig. 1) zwischen den Rahmenprofilen 4 angeordnet und weist einen Datenbus und Leistungsbus auf. Der Datenbus ist beispielsweise ein CAN - Bus (Controller Area Network). Der Leistungsbus ist beispielsweise ein Gleichspannungsbus, mittels dem die Antriebsmotoren 22 der Förderrollen 5 der Förderanlage 1 mit elektrischer Energie, beispielsweise 48 VDC, versorgt werden. Die Busse weisen jeweils mehrere elektrische Leitungen 85 auf, die von einem Isolierkörper 86 umgeben sind. Dabei handelt es sich bei den Leitungen 85 des Datenbusses um Datenleitungen und bei den Leitungen 85 des Leistungsbusses um Versorgungsleitungen. Vorzugsweise ist das Bussystem 51 als Flachbandkabel ausgeführt, bei dem die Leitungen elektrisch isoliert nebeneinander geführt sind.

Die elektrische Kontaktierungsvorrichtung 50 ist in einem festen Abstand zur Rollenachse 18 an der Halterung 37 befestigt und über ein elektrisches Leitungssystem 87 mit der Antriebselektronik 23 verbunden. Das Leitungssystem 87 kann durch auf einer Trägerplatine angeordnete Leitungen oder ein Verbindungskabel gebildet sein.

Die Kontaktierungsvorrichtung 50 weist die Kontaktelemente 88 zur elektrischen Kontaktierung der Leitungen 85 des Bussystems 51 auf. Die Kontaktelemente 88 sind durch Piercing-Kontakte oder Schneidkontakte etc. gebildet, daher weisen die Kontaktelemente 88 jeweils ein Mittel zum Durchtrennen des Isolierkörpers 86 und Kontaktieren der elektrischen Leitung 85 auf. Durch die Vermeidung einer aus dem Stand der Technik bekannten Klemmenverbindung, bei der ein Schraubvorgang vorzunehmen ist, vereinfacht sich die Montage der motorisierten Förderrolle 5. Die Antriebselektronik 23 ist beispielsweise mittels einer Schneidklemmtechnik an die Leitungen 85 des Bussystems 51 angeschlossen. Nachdem das Bussystem 51 über die gesamte Länge der Förderanlage 1 zwischen den Rahmenprofilen 4 angeordnet ist, und die Kontaktierungsvorrichtung 50 gemäß obiger Ausführung ausgebildet ist, können die motorisierten Förderrollen 5 relativ zu den Rahmenprofilen 4 an beliebiger Stelle an der Förderanlage 1 montiert werden. Dies ist möglich, da die Leitungen 85 des Bussystems 51 in Richtung ihrer Längserstreckung an beliebiger Stelle mittels der Kontaktelemente 88 kontaktierbar sind. Um eine zuverlässige Kontaktierung zwischen den Kontaktelementen 88 und den Leitungen 85 sicherzustellen, weist jedes Kontaktelement 88 mehrere über einen Bügel elektrisch miteinander verbundene Piercing-Kontakte oder Schneidkontakte auf, sodass eine Leitung 85 über mehrere Piercing-Kontakte oder Schneidkontakte kontaktiert wird.

Wie in Fig. 5a ersichtlich, ist das Bussystem 51 auf einer zwischen den Rahmenprofilen 4 unterhalb der Förderrollen 5, 6 vorgesehenen, beispielsweise am ersten Rahmenprofil 4 montierten Trägerschiene 89 angeordnet. Das Bussystem 51 umfasst nach gezeigter Ausführung neben dem Daten- und Leistungsbus zusätzlich einen Tragkörper 90, in welchem die Leitungen 85 eingebettet sind und der entweder vollständig aus einem elastisch reversiblen Material, beispielsweise aus Gummi oder Polyurethan, oder nur in dem Teilabschnitt oberhalb der Leitungen 85 aus einem elastisch reversiblen Material, beispielsweise aus Gummi oder Polyurethan, gebildet ist. Die Trägerschiene 89 und der Tragkörper 90 weisen formschlüssig miteinander in Eingriff bringbare Verriegelungselemente 91 auf, mittels welcher das Bussystem 51 gehalten wird. Andererseits kann das Bussystem 51 auch über eine Fügeverbindung, beispielsweise Kleben, zwischen dem Tragkörper 90 und der Trägerschiene 89 befestigt werden.

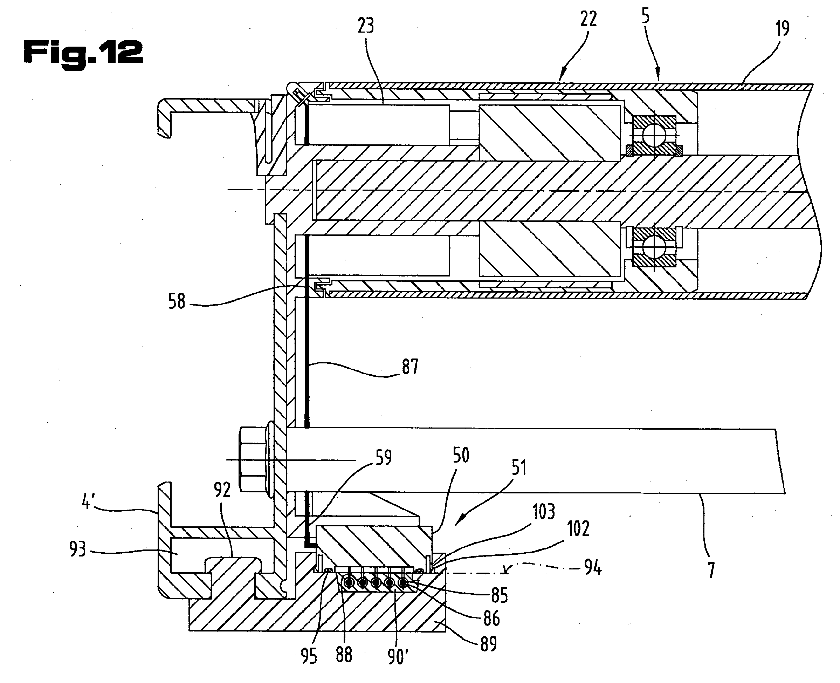

In Fig. 12 ist eine andere Ausführung der Anordnung des Bussystems 51 zwischen den Rahmenprofilen 4' unterhalb der Förderrollen 5, 6 gezeigt. Die Rahmenprofile 4' sind vorzugsweise Strangpressprofile aus Aluminium. Das Bussystem 51 umfasst nach gezeigter Ausführung neben dem Daten- und Leistungsbus zusätzlich einen Tragkörper 90', in welchem die Leitungen 85 eingebettet sind, und der entweder vollständig aus einem elastisch reversiblen Material, beispielsweise aus Gummi oder Polyurethan, oder nur in dem Teilabschnitt oberhalb der Leitungen 85 aus einem elastisch reversiblen Material, beispielsweise aus Gummi oder Polyurethan, gebildet ist. Der Tragkörper 90' umfasst ein Befestigungselement 92, welches eine Hinterschneidung ausbildet und mit Eingriffselementen eine Ausnehmung 93 im Rahmenprofil 4' formschlüssig hintergreift. Eine zusätzliche Trägerschiene 89 ist nicht erforderlich. Das Gehäuse der Kontaktierungsvorrichtung 50 und der Tragkörper 90' weisen miteinander in Eingriff bringbare Befestigungselemente 102, 103 auf, mittels welcher die Kontaktierungsvorrichtung 50 relativ zum Bussystem 51 am Tragkörper 90' gehalten ist. Die Befestigungselemente 102 der Kontaktierungsvorrichtung 50 weisen eine Verriegelungsnase und die Befestigungselemente103 des Tragkörpers 90' eine Verriegelungsschulter auf, welche formschlüssig ineinander eingreifen, wenn die Kontaktierungsvorrichtung 50 an das Bussystem 51 angeschlossen ist.

Liegen widrige Umgebungsbedingungen am Aufstellungsort der Förderanlage 1 vor, beispielsweise Gefrier- und Tiefkühlbereich, ist es von Vorteil, wenn zusätzlich in einem Kontaktierungsbereich, in welchem die Kontaktierungsvorrichtung 50 an das Bussystem 51 angeschlossen wird, eine Dichtung 95 vorgesehen wird, wie in den Fig. dargestellt. Die Dichtung 95 ist beispielsweise ein O-Ring und am Gehäuse der Kontaktierungsvorrichtung 50; 50' in einer Aufnahmenut angeordnet.

Ist die Kontaktierungsvorrichtung 50; 50' an das Bussystem 51 angeschlossen, liegt die Dichtung 95 im Kontaktierungsbereich an einer ebenen Oberseite der Trägerschiene 89 (Fig. 5a) oder an einer ebenen Oberseite des Tragkörpers 90' (Fig. 12) auf.

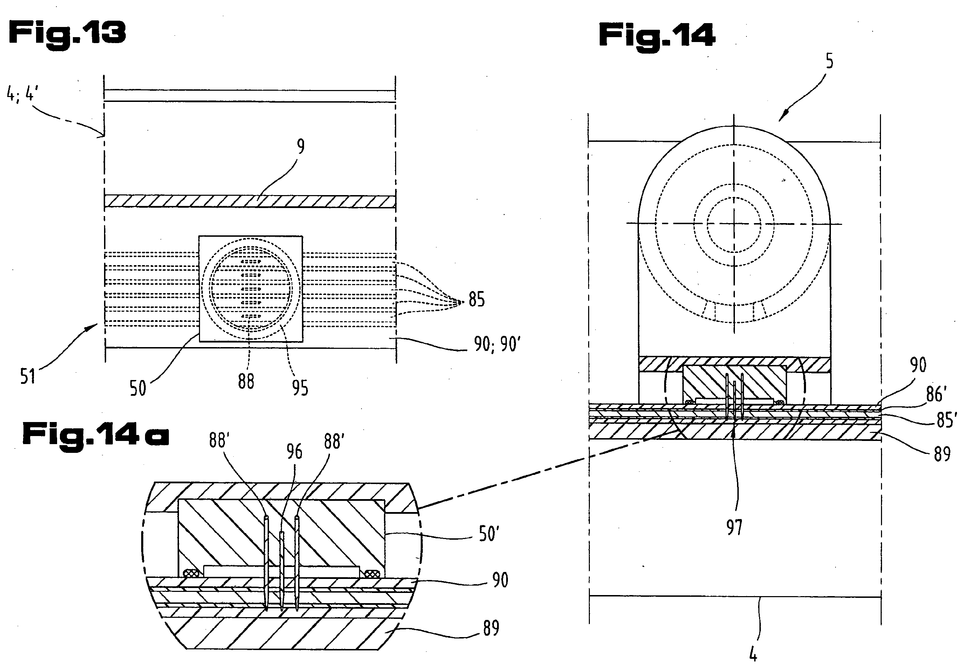

Das Bussystem 51 kann ferner eine in den Fig. 14 und 14a dargestellte sechste, elektrische Leitung 85' aufweisen, die in der Ebene und parallel neben den anderen Leitungen 85 verläuft. Bei der sechsten Leitung 85' handelt es sich um eine Initialisierungsleitung. Mittels dieser sechsten Leitung 85' kann automatisch die Reihenfolge der Vielzahl von motorisierten Förderrollen 5 in der Förderanlage 1 bestimmt werden. Dadurch können nach der Montage der motorisierten Förderrollen 5 an den Rahmenprofilen 4; 4' und automatische Zuordnung von Adressen über den Datenbus anschließend automatisch von jeder motorisierten Förderrollen 5 die Montageposition relativ zu Rahmenprofilen 4; 4' bestimmt werden.

Gemäß einem Verfahren zur Herstellung der Verkabelung an einer Förderanlage 1 zum Fördern von Fördergut, werden folgende Schritte durchgeführt:
a) Verlegen zumindest einer Versorgungsleitung (z.B. Leistungsbus), zumindest einer Datenleitung (z.B. Datenbus) und zumindest einer Initialisierungsleitung entlang der Förderanlage 1,
b) Kontaktieren der Antriebselektronik mit den genannten Leitungen, wobei mit einer Kontaktierungsvorrichtung (z.B. Kontaktierungsvorrichtung 50, 50') einer der Förderrollen 5 in einem Arbeitsgang:
   - die Versorgungsleitung mit einem ersten Kontaktelement 88, insbesondere einem Schneidklemmkontakt oder Piercing-Kontakt, mit einer ersten Verbindungsleitung zur Antriebselektronik verbunden wird,
   - die Datenleitung mit einem zweiten Kontaktelement 88, insbesondere einem Schneidklemmkontakt oder Piercing-Kontakt, mit einer zweiten Verbindungsleitung zur Antriebselektronik verbunden wird und
   - die Initialisierungsleitung durchtrennt wird (z.B. mit Hilfe einer Trennschneide 96) und die freien Enden der Initialisierungsleitung beidseits der Trennstelle 97 mit Hilfe je einem Kontaktelement 88', insbesondere einem Schneidklemmkontakt oder Piercing-Kontakt, mit je einer dritten beziehungsweise vierten Verbindungsleitung zur Antriebselektronik verbunden werden.

Dabei umfasst die Förderanlage 1 zum Fördern von Fördergut:
- mehrere, in Förderrichtung 3 örtlich hintereinander liegende, Antriebe (z.B. Förderrollen 5) jeweils umfassend einen elektrischen Antriebsmotor (z.B. Antriebsmotor 22) und eine Antriebselektronik (z.B. Antriebselektronik 23) zur Steuerung/Regelung des Antriebsmotors, und

- eine Versorgungsleitung, eine Datenleitung und eine Initialisierungsleitung, welche entlang der Förderanlage verlegt sind, wobei die Antriebselektronik mit den genannten Leitungen mit einer Kontaktierungsvorrichtung (z.B. Kontaktierungsvorrichtung 50, 50') kontaktierbar ist, welche dazu vorbereitet ist, in einem Arbeitsschritt:
- die Versorgungsleitung mit einem ersten Kontaktelement 88, insbesondere einem Schneidklemmkontakt oder Piercing-Kontakt, mit einer ersten Verbindungsleitung zur Antriebselektronik zu verbinden,
- die Datenleitung mit einem zweiten Kontaktelement 88, insbesondere einem Schneidklemmkontakt oder Piercing-Kontakt, mit einer zweiten Verbindungsleitung zur Antriebselektronik zu verbinden und
- die Initialisierungsleitung zu durchtrennen (z.B. mit Hilfe einer Trennschneide 96) und die freien Enden der Initialisierungsleitung beidseits der Trennstelle 97 mit Hilfe je einem Kontaktelement 88', insbesondere einem Schneidklemmkontakt oder Piercing-Kontakt, mit je einer dritten beziehungsweise vierten Verbindungsleitung zur Antriebselektronik zu verbinden.

Die Trennschneide kann dabei vollständig aus einem Isolator gefertigt sein oder aus Metall bestehen, das mit einem Isolator überzogen ist. Die Trennschneide durchtrennt die Initialisierungsleitung und isoliert die dabei entstehenden Enden der Initialisierungsleitung gegeneinander. Die Trennschneide kann im vorderen Bereich aus Metall bestehen und im hinteren Teil aus einem Isolator, um den Trennvorgang zu erleichtern, aber dennoch die Isolierung der beiden Enden gegeneinander zu gewährleisten.

Zu demselben Zweck kann eine metallische Trennschneide in Schneidrichtung in ihrem hinteren Abschnitt auf den, den Enden der Initialisierungsleitung zugewandten Seiten mit einem Isolator überzogen werden.

Schließlich ist es auch möglich, die Trennschneide konstruktiv so zu gestalten, dass die Isolierung der Enden der Initialisierungsleitung gegeneinander dadurch erfolgt, dass die Trennschneide die Initialisierungsleitung nach dem Trennen ausschließlich an deren Isolation berührt.

Die Trennschneide kann in diesem Fall vollständig aus Metall gefertigt sein und ist beispielsweise T-förmig ausgebildet, wobei der Steg die Trennschneide bildet und vom Steg vorragenden Trennarme die Enden Initialisierungsleitung von der Trennschneide entfernt, wenn die Kontaktierungsvorrichtung 50' an den Leitungen angeschlossen ist. In diesem Fall bilden die Trennvorrichtung und die Trennschneide eine Trennvorrichtung.

Als Isolatoren kommen in allen Fällen insbesondere Kunststoff oder Keramik in Betracht.

An dieser Stelle wird darauf hingewiesen, dass es unerheblich ist, wann während des Aufsetzens der Kontaktierungsvorrichtung 50' welche Schneidklemmverbindung oder Piercing-Kontaktverbindung hergestellt wird, beziehungsweise wann die Trennung der Initialisierungsleitung erfolgt. Beispielsweise kann die Schneidklemmverbindung oder Piercing-Kontaktverbindung zur Versorgungsleitung und zur Datenleitung gleichzeitig erfolgen, dann die Durchtrennung der Initialisierungsleitung und dann die Schneidklemmverbindungen oder Piercing-Kontaktverbindungen auf die freien Enden der Initialisierungsleitung. Denkbar ist beispielsweise aber auch, dass alle Schneidklemmverbindungen oder Piercing-Kontaktverbindungen gleichzeitig ausgeführt werden und die Trennung der Initialisierungsleitung davor oder danach getrennt wird.

"In einem Arbeitsgang" bedeutet im Rahmen dieses Verfahren das Anschließen der Kontaktierungsvorrichtung 50' an die besagten Leitungen, insbesondere Einstecken eines (Mehrfach-) Steckers in eine entsprechende Buchse oder in die entsprechende Trägerschiene 89 oder das Betätigen eines Bügels, welches das Herstellen der Schneidklemmverbindungen oder Piercing-Kontaktverbindungen und das Durchtrennen der Initialisierungsleitung bewirkt.

Vorteilhaft werden den Antriebselektroniken in einem Schritt c) schließlich schrittweise Adressen zugewiesen, indem ein auf der Initialisierungsleitung angelegtes Signal durch die Antriebselektroniken schrittweise von einer Antriebselektronik zur nächsten Antriebselektronik geleitet wird, um so eine örtliche Reihenfolge der Antriebselektroniken bzw. die Montageposition jeder motorisierten Förderrolle 5 relativ zum Rahmen 2 festzustellen.

Fig. 14 und 14a zeigt nun eine auf die Anwendung der automatischen Bestimmung der Reihenfolge der Förderrollen 5 in der Förderanlage 1 modifizierte, konkrete Ausführung der Kontaktierungsvorrichtung 50', welche die den fünf Leitungen 85 der Busse zugeordnete Kontaktelemente 88, zwei der sechsten Leitung 85' zugeordnete Kontaktelemente 88' und eine der sechsten Leitung 85' zugeordnete Trennschneide 96 ausweist. Jedes Kontaktelement 88 umfasst mehrere über einen Bügel elektrisch miteinander verbundene Piercing-Kontakte oder Schneidkontakte auf. Die Kontaktelemente 88' umfassen wiederum einen Piercing-Kontakt oder Schneidkontakt und sind über die dritte Verbindungsleitung und die vierte Verbindungsleitung mit einem, die Antriebselektronik 23 aufweisenden elektronischen Schalter (nicht dargestellt) verbunden. Die Trennschneide 96 ragt am Gehäuse der Kontaktierungsvorrichtung 50' in Richtung der Kontaktelemente 88' vor und ist zwischen den Piercing-Kontakten oder Schneidkontakten angeordnet. Mittels der Trennschneide 96 wird die sechste Leitung 85' durchtrennt und die Enden der Leitung 85' im Durchtrennungsbereich elektrisch voneinander isoliert, wenn die Kontaktierungsvorrichtung 50' an das Bussystem 51 angeschlossen ist.

Das Leitungssystem 87 ist an die Kontaktelementen 88; 88' angeschlossen und über zumindest die erste, zweite, dritte und vierte Verbindungsleitung (nicht gezeigt) mit der Antriebselektronik 23 verbindbar.

Wie erwähnt, umfasst die Antriebselektronik 23 sämtlicher motorisierten Förderrollen 5 einen elektronischen Schalter. Die Schalter sind über die sechste Leitung 85' miteinander verbunden und in Serie geschaltet. Soll nun die Reihenfolge der Vielzahl von motorisierten Förderrollen 5 in der Förderanlage 1 bestimmt werden, werden vorerst nach der Montage der motorisierten Förderrolle 5 und Anschluss der Antriebselektronik 23 an den Daten- und Leistungsbus jeder motorisierten Förderrolle 5 vom Datenbus eine Systemadresse zugeordnet und anschließend die Schalter mehrerer hintereinander liegender Antriebselektronik 23 in einen AusZustand gesteuert, sofern dieser nicht ohnehin vorliegt. Danach wird ein Signal an die sechste Leitung 85' angelegt. Sodann wird geprüft, an welcher der motorisierten Förderrolle 5 das elektrische Signal detektiert werden kann. Wegen der offenen Schalter empfängt nur jene motorisierten Förderrolle 5 das eingespeiste Signal, welche dem elektrischen Einspeisepunkt am nächsten liegt. In Folge wird der zugeordnete Schalter vom Datenbus in einen Ein-Zustand gesteuert, sodass nun auch die nächste motorisierte Förderrolle 5 das Signal empfangen kann usw. Durch Erfassen, wann welche motorisierte Förderrolle 5 das Signal empfangen hat, kann leicht die gesuchte örtliche Reihenfolge ermittelt werden.

Zum Zweck der Bestimmung der Montageposition jeder motorisierten Förderrollen 5 relativ zu den Rahmenprofilen 4; 4' kann anstatt der sechsten Leitung 85' auch die Versorgungs- und/oder Datenleitung 85 verwendet werden.

Da das Bussystem 51 über den Tragkörper 90, 90' relativ zum Rahmen fixiert gehalten ist, bewirken die beim Kontaktieren der Kontaktelemente 88 mit dem Daten- und Leistungsbus auftretenden Kräfte keine unerwünschten Verlagerungen des Bussystems 51. Die Kontaktelemente 88; 88' durchdringen dabei vorerst den Tragkörper 90, 90' und die Isolierkörper 86; 86', ehe sie die Leitungen 85; 85' kontaktieren. Die Trägerschiene 89 bzw. der Tragkörper 90' bildet vorzugsweise eine horizontale oder geneigte Kontaktierungsebene 94 aus und sind auch die elektrisch isoliert voneinander verlaufenden Leitungen 85; 85' in einer zur Kontaktierungsebene 94 parallel verlaufenden Ebene nebeneinander angeordnet. Ein wesentlicher Vorteil liegt auch darin, dass die elektrischen Leitungen 85; 85' nicht freigelegt und somit vor äußeren Einflüssen, wie Staub, Feuchtigkeit, und dgl., geschützt sind und auch nach dem Einstechen der Kontaktelemente 88; 88' in den Tragkörper 90, 90' und Kontaktieren mit den Leitungen 85; 85' sich das elastische Material des Tragkörpers 90, 90' an die Kontaktelemente 88; 88' dichtend anlegt. Werden die Kontaktelemente 88; 88' aus dem Tragkörper 90, 90' herausgezogen, schließen sich die Einstechlöcher selbstständig. Dieser "selbstheilende Effekt" des Tragkörpers 90, 90' und/oder der Leitungen 85; 85' ermöglicht auch nach dem Austausch, beispielsweise einer defekten Förderrolle 5 und Abschließen der Kontaktierungsvorrichtung 50; 50' vom Bussystem 51, insbesondere einen Schutz vor Kurzschlüssen.

Zur Montage einer Förderrolle 5 im Rahmen 2, wird die Förderrolle 5 derart von oben zwischen die Rahmenprofile 4 bewegt, dass die Führungsteile 33, 61 und die Verriegelungsvorrichtungen 38, 65 der Lagervorrichtungen 24, 25 über die Einschuböffnungen 13 nach unten in die beiden einander gegenüberliegenden Lageraufnahmen 11 eintreten. Durch Ausübung einer Montagekraft nach unten in radialer Richtung relativ zu den Rahmenprofilen 4 gleiten die Rastnasen 53, 78 mit ihren Schrägflächen 57, 83 am Führungsrand 17 jeder Lageraufnahme 11 entlang. Dabei werden die Federzungen 54, 79 in Richtung auf die Stirnseiten 26, 27 der Förderrolle 5 elastisch gebogen. Die Förderrolle 5 wird auf ihrer Montagebewegung durch die Formelemente 44, 71 in axialer Richtung relativ zu den Rahmenprofilen 4 geführt. Dabei umgreifen die Formelemente 44, 71 den Führungsabschnitt 12 der Lageraufnahmen 11. Schließlich führt die Montagebewegung dazu, dass die Rastnasen 53, 78 unter den Führungsrand 17 in den oberen Profilschenkeln 10 tritt und diese aus ihrer ausgelenkten Zwischenstellung in eine Raststellung bewegt werden, sodass in der Raststellung die Rastnasen 53, 78 den Führungsrand 17 in den oberen Profilschenkeln 10 formschlüssig hintergreifen. Die Montagestellung der Förderrolle 5 (Fig. 5) ist erreicht, wenn die Lagerkörper 24, 25 mit ihren Führungsteilen 33, 61 gegen die Stützfläche 14 aufliegen und die Rastnasen 53, 78 in ihre Raststellung bewegt sind.

Während der Montagebewegung der motorisierten Förderrolle 5 in ihre Montagestellung in radialer Richtung zur Rollenachse 18 relativ zu den Rahmenprofilen 4 durchdringen die Kontaktelemente 88; 88' der Kontaktierungsvorrichtung 50; 50' den Tragkörper 90; 90' und den Isolierkörper 86. Befindet sich die Förderrolle 5 in ihrer Montagestellung, sind die Kontaktelemente 88; 88' mit den Leitungen 85; 85' des Bussystems 51 elektrisch verbunden. Demnach ist am Ende der Montagebewegung einerseits die elektrische Anschlussverbindung zwischen der Antriebselektronik 23 und dem Bussystem 51 hergestellt und andererseits die Förderrolle 5 relativ zu den Rahmenprofilen 4; 4' über zumindest eine Lagervorrichtung 24 oder beide Lagervorrichtungen 24, 25 mechanisch verriegelt.

Zum Lösen der Verriegelungsvorrichtung 38, 65 und zum Auswechseln der Förderrolle 5 ist eine Aussparung 55, 80 vorgesehen, welche in der Montagestellung der Förderrolle 5 zwischen dem Führungsrand 17 und der Federzungen 54, 79 freiliegt. Die Aussparung 55, 80 ist zur Aufnahme eines geeigneten Werkzeuges (nicht dargestellt) bestimmt, mit dem die Rastnasen 53, 78 aus ihrer Raststellung in eine ausgelenkte Zwischenstellung bewegt werden, in letzterer die Förderrolle 5 nach oben entfernt werden kann. Dadurch kann eine defekte motorisierte Förderrolle 5 sehr rasch demontiert und durch eine neue motorisierte Förderrolle 5 ausgewechselt werden. Dabei werden auf der Demontagebewegung der motorisierten Förderrolle 5 in radialer Richtung zur Rollenachse 18 relativ zu den Rahmenprofilen 4 die Kontaktelemente 88; 88' der Kontaktierungsvorrichtung 50; 50' aus den Tragkörper 90; 90' und den Isolierkörper 86; 86' herausgezogen. Wurde die Förderrolle 5 entfernt, sind durch den "selbstheilenden Effekt" die Leitungen 85; 85' wiederum vollständig elektrisch isoliert.

Wie in Fig. 5, 15, 16 und 17 eingetragen, ist das erste Lager 20 gegenüber der ersten Stirnseite 26 des Rollenkörpers 19 in Richtung der zweiten Stirnseite 27 des Rollenkörpers 19 soweit versetzt ist, dass zwischen der ersten Stirnseite 26 des Rollenkörpers 19 und dem ersten Lager 20 ein Einbauraum 100 ausgebildet ist, innerhalb dem ausschließlich der Antriebsmotor 22 oder der Antriebsmotor 22 und auch die Antriebselektronik 23 angeordnet sind. Der Einbauraum 100 weist eine axiale Länge in Richtung der Rollenachse 18 auf, die zumindest der Breite des Antriebsmotors 22 entspricht. Werden innerhalb des Einbauraumes 100 sowohl der Antriebsmotor 22 als auch die Antriebselektronik 23 angeordnet, entspricht die Länge des Einbauraumes 100 der Breite des Antriebsmotors 22 und der Antriebselektronik 23. Der Antriebsmotor 22 und die Antriebselektronik 23 sind über den oben beschriebenen Anschlussstecker 31 verbunden, der koaxial zur Rollenachse 18 angeordnet ist. Der Anschlussstecker 31 weist Schneidklemmkontakte oder Piercing-Kontakte (nicht dargestellt) auf, um die Wicklungen des Stators 28 mit der Antriebselektronik 23 zu verbinden. Eine zusätzliche Verkabelung zwischen Antriebsmotor 22 und Antriebselektronik 23, welche durch eine Bohrung in der Rollenachse 18 hindurchgefädelt wird, ist nicht erforderlich. Die Antriebselektronik 23 ist wiederum über das Leitungssystem 87 mit der Kontaktierungsvorrichtung 50; 50' verbunden, wobei das Leitungssystem 87 außerhalb der Rollenachse 18 in radialer Richtung getrennt von der an das Rahmenprofil 4; 4' anlegbaren Außenfläche 39 (Lagerfläche) aus der ersten Lagervorrichtung 24 geführt wird. Demnach ist das Leitungssystem 87 zumindest auf der, dem Rahmenprofil 4; 4' zugewandten Seite vom Lagerkörper 32 überdeckt.

Mit dieser Ausbildung ist eine einfache und kostengünstige Herstellung der motorisierten Förderrolle 5 möglich. Die Montage des Antriebsmotors 22 und der Antriebselektronik 23 erfolgt derart, dass vorerst der Stator 28 auf die Rollenachse 19 aufgeschoben und danach die erste Lagervorrichtung 24 mit der Antriebselektronik 23 als vorgefertigte Baueinheit mit ihrer Lagerbuchse 34 auf das erste Ende der Rollenachse 18 aufgesteckt. Auf der Montagebewegung der ersten Lagervorrichtung 24 axial in Richtung auf den Antriebsmotor 22 wird über den Anschlussstecker 31 automatisch die elektrische Anschlussverbindung zwischen dem Antriebsmotor 22, insbesondere den Wicklungen des Stators 28, und der Antriebselektronik 23 hergestellt. Ist die erste Lagervorrichtung 24 auf der Rollenachse 19 axial positioniert, verschließt der Lagerkörper 32 das offene Ende des Rollenkörpers 19. Durch die Vermeidung einer aus dem Stand der Technik bekannten Klemmenverbindung, bei der ein Schraubvorgang vorzunehmen ist, vereinfacht sich die Montage der motorisierten Förderrolle 5. Ein drittes Lager, welches gemäß dem Stand der Technik zusätzlich nahe der ersten Stirnseite 26 des Rollenkörpers 19 angeordnet wird, ist nicht vorgesehen.

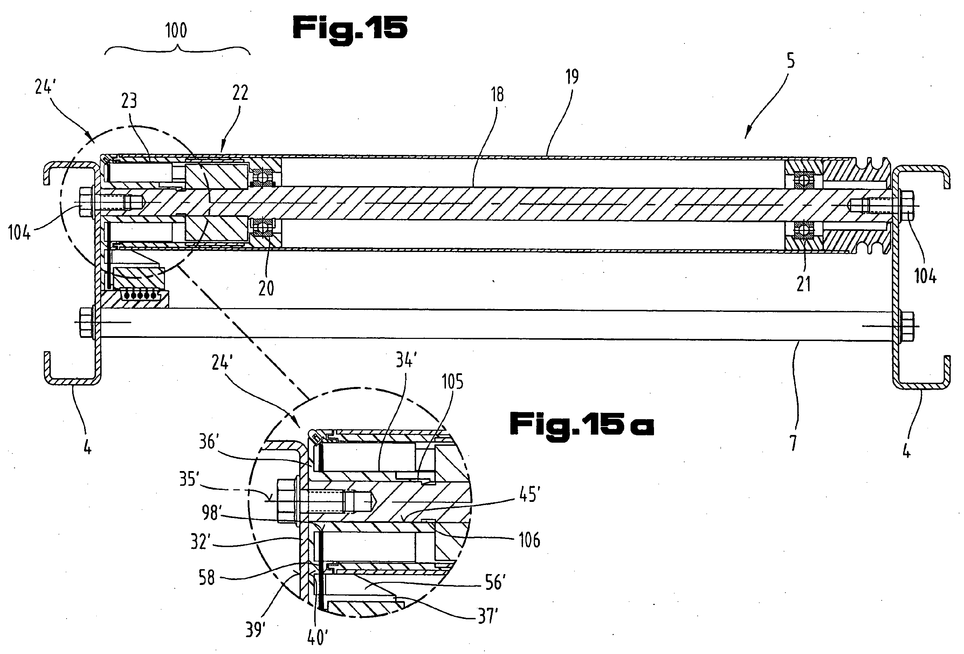

Die Ausführung gemäß Fig. 15, 15a unterscheidet sich von den vorhergehenden Ausführungen dadurch, dass die motorisierte Förderrolle 5 über Befestigungsschrauben 104 im Rahmen gehalten ist. Die erste Lagervorrichtung 24' umfasst einen aus der Außenkontur des Rollenkörpers 19 herausragenden, plattenförmigen Lagerkörper 32', eine Lagerbuchse 34', einen koaxial zur Achse der Lagerbuchse 34' angeordneten, zylindrischen Lagerbund 36', eine Halterung 37' und eine zwischen der Halterung 37' und dem Lagerkörper 32' angeordnete Versteifungsrippe 56'. Der Lagerkörper 32' bildet eine an die Innenseite des ersten Rahmenprofils 4 bzw. Profilsteges 9 anlegbare Außenfläche 39' und eine dieser gegenüberliegende Innenfläche 40' aus. Die Außenfläche 39' dient als Lagerfläche. Der Lagerkörper 32', die Lagerbuchse 34' und die Halterung 37' sind gemäß oben beschriebener Ausführung ausgebildet. Ebenso ist zwischen dem Rollenkörper 19 und der ersten Lagervorrichtung 24' eine Dichtung 48 ausgebildet, wie oben beschrieben.

Die erste Lagervorrichtung 24' ist über die Lagerbohrung 45' auf das erste Ende der Rollenachse 18 aufgeschoben und über zumindest ein Sicherungselement 105 in axialer Richtung auf der Rollenachse 18 fixiert gehalten und/oder gegen Verdrehung gesichert. Das Sicherungselement 105 ist beispielsweise durch elastische Federzunge gebildet, die an ihrem freien Ende eine Rastnase aufweist, welche in eine umlaufende Nut 106 in der Rollenachse 18 formschlüssig eingreift.

Die erste Lagervorrichtung 24' ist aus einem elastisch verformbaren Material, beispielsweise Kunststoff, einstückig geformt.

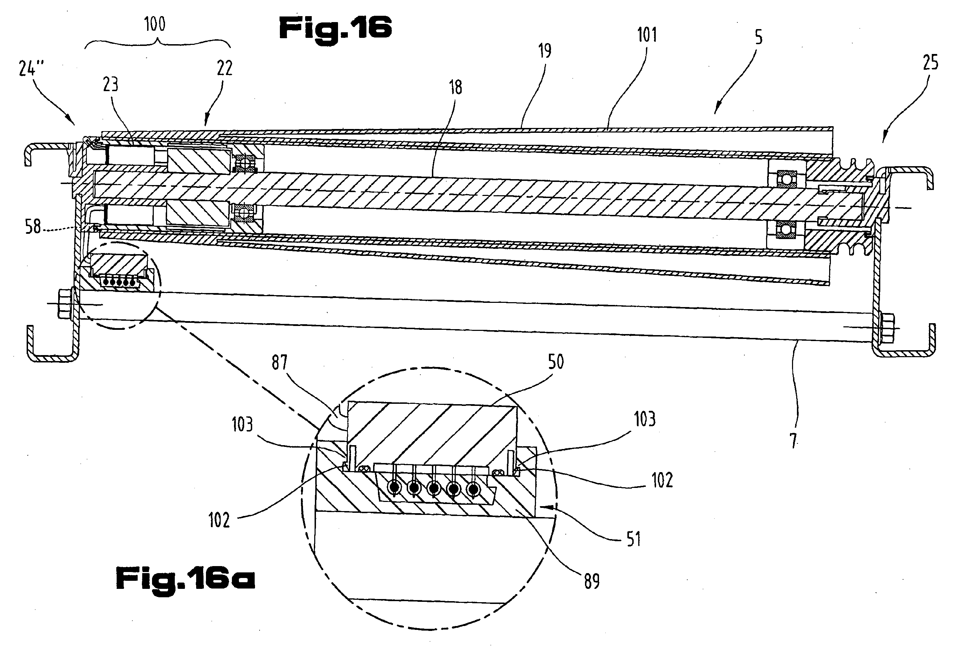

Gemäß der Ausführung nach Fig. 16 ist die motorisierte Förderrolle 5 als Kurvenrolle ausgebildet und an ihrem Rollenmantel mit einem Konuskörper 101 ausgestattet. Ebenso zeigt diese Fig. eine andere Ausführung des Leitungssystem 87 und der ersten Lagervorrichtung 24". Die erste Lagervorrichtung 24" entspricht im Wesentlichen der ersten Lagervorrichtung 24 gemäß Fig. 6 bis 8, weist diese jedoch keine Halterung 37 auf. Das Leitungssystem 87 zwischen der Antriebselektronik 23 und der Kontaktierungsvorrichtung 50 ist durch ein Verbindungskabel gebildet, wobei das Leitungssystem 87 durch die Aussparung 58 in radialer Richtung getrennt von der an das Rahmenprofil 4; 4' anlegbaren Außenfläche 39 (Lagerfläche) aus der ersten Lagervorrichtung 24" geführt wird. Die Aussparung 58 verläuft in radialer Richtung zur Rollenachse 18 und ist durch eine zylindrische Bohrung im Lagerbund gebildet.

Nach einer anderen, nicht gezeigten Ausführung kann die motorisierte Förderrolle 5 anstatt der Lagervorrichtungen 24, 25 über Befestigungsschrauben, wie in Fig. 15 gezeigt, am Rahmen 2 montiert werden.

Wie in Fig. 16a näher dargestellt, weist das Gehäuse der Kontaktierungsvorrichtung 50 und die Trägerschiene 89 miteinander in Eingriff bringbare Befestigungselemente 102, 103 auf, mittels welcher die Kontaktierungsvorrichtung 50 relativ zum Bussystem 51 auf der Trägerschiene 89 gehalten ist. Die Befestigungselemente 102 der Kontaktierungsvorrichtung 50 weisen eine Verriegelungsnase und die Befestigungselemente103 der Trägerschiene 89 eine Verriegelungsschulter auf, welche formschlüssig ineinander eingreifen, wenn die Kontaktierungsvorrichtung 50 an das Bussystem 51 angeschlossen ist. Die Befestigungselemente103 verlaufen in einem Führungskanal in Längsrichtung der Trägerschiene 89.

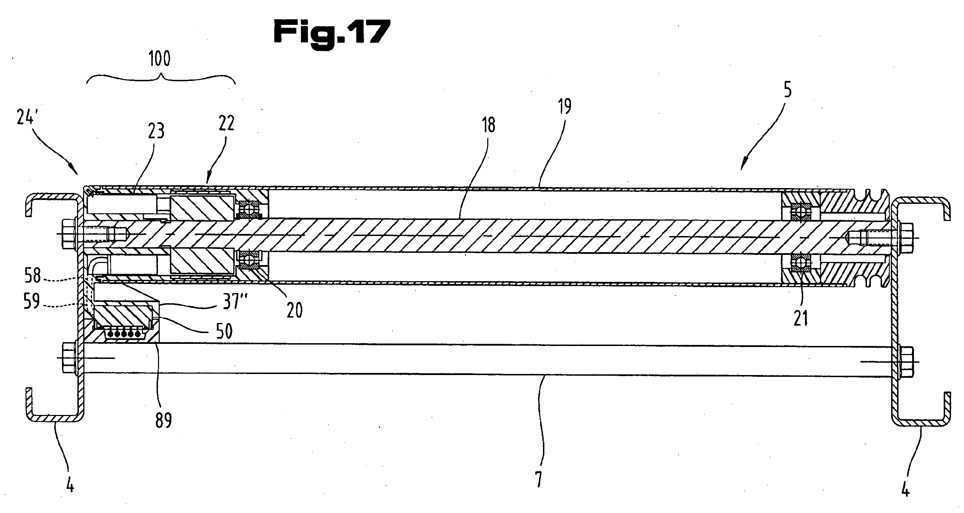

Die Ausführung nach Fig. 17 weist die erste Lagervorrichtung 24' gemäß Fig. 15 auf, welche eine modifizierte Ausbildung der Halterung 37" mit einer Aufnahmekammer ausbildet, in der die Kontaktierungsvorrichtung 50 eingesetzt ist. Der die Aufnahmekammer umgrenzende Randsteg wird direkt mit seiner Stirnseite auf die Oberfläche der Trägerschiene 89 aufgesetzt, sodass ein wirksamer Schutz gegen Verschmutzungen im Kontaktierungsbereich ohne zusätzliche Dichtung erreicht wird. Das Leitungssystem 87 zwischen der Antriebselektronik 23 und der Kontaktierungsvorrichtung 50 ist durch ein Verbindungskabel gebildet. Die Aussparungen 58, 59 verlaufen in radialer Richtung zur Rollenachse 18 und sind durch eine gemeinsame zylindrische Bohrung im Lagerbund gebildet. Das Gehäuse der Kontaktierungsvorrichtung 50 und die Trägerschiene 89 weisen miteinander in Eingriff bringbare Befestigungselemente 102, 103 auf, mittels welcher die Kontaktierungsvorrichtung 50 relativ zum Bussystem 51 auf der Trägerschiene 89 gehalten ist. Die Detailausführung der Befestigungselemente 102, 103 ist in Fig. 16a beschreiben.

Von Vorteil sind auch die in den Fig. 18 und 19 gezeigten Ausführungen, wonach die motorisierte Förderrolle 5 an ihren beiden Enden über jeweils eine Ausgleichsvorrichtung 107; 107' in senkrechter Richtung relativ zu den Rahmenprofile 4; 4' verstellbar am Rahmen 2 gelagert ist. Auch wenn die Ausgleichsvorrichtung 107; 107' in Anwendung an der motorisierten Förderrolle 5 beschreiben wird, es genauso gut möglich, dass auch die nicht motorisierte Förderrolle 6 an ihren beiden Enden über eine Ausgleichsvorrichtung 107; 107' in senkrechter Richtung relativ zu den Rahmenprofile 4; 4' verstellbar am Rahmen 2 gelagert ist. Durch diese Maßnahme wird eine Nivellierung zwischen den Förderoberflächen der Förderrollen 5, 6 erreicht und wird das Gewicht des Fördergutes auf alle Förderrollen 5, 6, auf denen das Fördergut auflastet, gleichmäßig verteilt und auf den Rahmen 2 abgetragen. Somit kann das Antriebsmoment der Antriebsmotoren 22 der Förderrollen 5 optimal auf das zu transportierende Fördergut übertragen und sämtliche Förderrollen 5, 6 konstruktiv optimiert werden.

Nach einer ersten Ausführung (Fig. 18) ist die Ausgleichsvorrichtung 107 durch einen Lagerabschnitt 108 aus elastisch verformbarem Material, beispielsweise Kunststoff, gebildet, der zwischen dem Rahmenprofil 4; 4' und der Lagervorrichtung 24, 25 angeordnet ist. Der Lagerabschnitt 108 kann von der Lagervorrichtung 24, 25 ausgebildet oder als eigenständiger Bauteil hergestellt werden, letzterer am Führungsabschnitt 12 einer jeden Lageraufnahme 11 im Bereich der Stützfläche 14 befestigt wird.

Nach einer zweiten Ausführung (Fig. 19) ist die Ausgleichsvorrichtung 107' durch einen Lagerabschnitt 108' aus elastisch verformbarem Material, beispielsweise Kunststoff, gebildet, der zwischen der Lagervorrichtung 24, 25 und der Rollenachse 18 angeordnet ist. Beispielsweise wird auf die Enden der Rollenachse 19 jeweils eine Hülse aufgesteckt, die nach der Montage der Lagervorrichtung 24, 25 auf die Rollenachse 19, die Lagerabschnitte 108' aus elastisch verformbarem Material bilden.

Eine weitere, nicht gezeigte Ausführung besteht darin, dass am Rollenmantel der motorisierten Förderrolle 5 eine Beschichtung, beispielsweise aus Kunststoff oder Gummi, angebracht ist. Dadurch kann der Reibschluss zwischen der Förderrolle 5 und dem zu fördernden Fördergut verbessert werden.

**Bezugszeichenaufstellung**

| | | | |
|---|---|---|---|
| 1 | Förderanlage | 41 | Führungsfläche |
| 2 | Rahmen | 42 | Führungsfläche |
| 3 | Förderrichtung | 43 | Stützfläche |
| 4, 4' | Rahmenprofil | 44 | Formelement |
| 5 | Förderrolle | 45, 45' | Lagerbohrung |
| | | | |
| 6 | Förderrolle | 46 | Aufnahme |
| 7 | Querträger | 47 | Begrenzungsfläche |
| 8 | Zugmittel | 48 | Dichtung |
| 9 | Profilsteg | 49 | Begrenzungsfläche |
| 10 | Profilschenkel | 50, 50' | Kontaktierungsvorrichtung |
| | | | |
| 11 | Lageraufnahme | 51 | Bussystem |
| 12 | Führungsabschnitt | 52 | Grundkörper |
| 13 | Einschuböffnung | 53 | Rastnase |
| 14 | Stützfläche | 54 | Federzunge |
| 15 | Führungsfläche | 55 | Aussparung |
| | | | |
| 16 | Führungsfläche | 56, 56' | Versteifungsrippe |
| 17 | Führungsrand | 57 | Schrägfläche |
| 18 | Rollenachse | 58 | Aussparung |
| 19 | Rollenkörper | 59 | Aussparung |
| 20 | Lager | 60 | Lagerkörper |
| | | | |
| 21 | Lager | 61 | Führungsteil |
| 22 | Antriebsmotor | 62 | Lagerbuchse |
| 23 | Antriebselektronik | 63 | Achse |
| 24, 24' | Lagervorrichtung | 64 | Lagerbund |
| 25 | Lagervorrichtung | 65 | Verriegelungsvorrichtung |
| | | | |
| 26 | Stirnseite | 66 | Außenfläche |
| 27 | Stirnseite | 67 | Innenfläche |
| 28 | Stator | 68 | Führungsfläche |
| 29 | Rotor | 69 | Führungsfläche |
| 30 | Permanentmagnet | 70 | Stützfläche |
| | | | |
| 25 | Anschlussstecker | 71 | Formelement |
| 32,32' | Lagerkörper | 72 | Lagerbohrung |
| 33 | Führungsteil | 73 | Übertriebsscheibe |
| 34,34' | Lagerbuchse | 74 | Rille |
| 35 | Achse | 75 | Begrenzungsfläche |
| | | | |
| 36,36' | Lagerbund | 76 | Dichtung |
| 37, 37' | Halterung | 77 | Begrenzungsfläche |
| 38 | Verriegelungsvorrichtung | 78 | Rastnase |
| 39, 39' | Außenfläche | 79 | Federzunge |
| 40, 40' | Innenfläche | 80 | Aussparung |
| 81 | Sicherungselement | | |
| 82 | Diagnosevorrichtung | | |
| 83 | Schrägfläche | | |
| 84 | Nut | | |
| 85, 85' | Leitung | | |
| | | | |
| 86 | Isolierkörper | | |
| 87 | Leitungssystem | | |
| 88, 88' | Kontaktelement | | |
| 89 | Trägerschiene | | |
| 90, 90' | Tragkörper | | |
| | | | |
| 91 | Verriegelungselement | | |
| 92 | Befestigungselement | | |
| 93 | Ausnehmung | | |
| 94 | Kontaktierungsebene | | |
| 95 | Dichtung | | |
| | | | |
| 96 | Trennschneide | | |
| 97 | Trennstelle | | |
| 98 | Ausnehmung | | |
| 99 | Dichtungssegment | | |
| 100 | Einbauraum | | |
| | | | |
| 101 | Konuskörper | | |
| 102 | Befestigungselement | | |
| 103 | Befestigungselement | | |
| 104 | Befestigungsschraube | | |
| 105 | Sicherungselement | | |
| 106 | Begrenzungsfläche | | |
| 107, 107' | Ausgleichvorrichtung | | |
| 108, 108' | Lagerabschnitt | | |

## Patentansprüche

1. Förderanlage (1) zum Fördern von Fördergut mit Rahmenprofilen (4; 4'), einem Bussystem (51) und Förderrollen (5, 6), wovon zumindest eine Förderrolle (5) Lager (20, 21), eine elektrische Kontaktierungsvorrichtung (50; 50') zum Anschluss einer Antriebselektronik (23) an das Bussystem (51), einen Rollenkörper (19) und einen innerhalb von diesem angeordneten, elektrischen Antriebsmotor (22) umfasst, und über eine Lagervorrichtung (24) mit einem der Enden an einem der Rahmenprofile (4; 4') montierbar ist, wobei das Bussystem (51) entlang der Förderanlage (1) angeordnet ist und auf der Montagebewegung der motorisierten Förderrolle (5) in radialer Richtung relativ zum Rahmenprofil (4; 4') die Kontaktierungsvorrichtung (50; 50') mit Kontaktelementen (88; 88') Leitungen (85; 85') des Bussystems (51) elektrisch kontaktiert, wobei die motorisierte Förderrolle (5) und die Lagervorrichtung (24) eine gemeinsame Baueinheit bildet, und die Lagervorrichtung (24) einen aus der Außenkontur des Rollenkörpers (19) herausragenden Lagerkörper (32) mit einer gegen das Rahmenprofil (4; 4') anlegbaren Außenfläche (39) aufweist, und wobei die Antriebselektronik (23) und die Kontaktierungsvorrichtung (50; 50') über ein elektrisches Leitungssystem (87) verbunden sind, **dadurch gekennzeichnet, dass** die Lagervorrichtung (24) eine Halterung (37) für die Befestigung der elektrischen Kontaktierungsvorrichtung (50; 50') aufweist, und daß das Leitungssystem (87) durch eine, von der Außenfläche (39) getrennt ausgebildete Aussparung (58) aus der Lagervorrichtung (24) herausgeführt ist.

2. Förderanlage nach Anspruch 1, **dadurch gekennzeichnet, dass** der Rollenkörper (19) der motorisierten Förderrolle (5) über ein erstes Lager (20) und zweites Lager (21) auf einer Rollenachse (18) drehbar gelagert ist und dass der Antriebsmotor (22) und die Antriebselektronik (23) zwischen der Lagervorrichtung (24) und dem erstem Lager (20) angeordnet und das Leitungssystem (87) außerhalb der Rollenachse (18) zwischen dem ersten Lager (20) und der Außenfläche (39), insbesondere zwischen der Antriebselektronik (23) und der Außenfläche (39), in radialer Richtung aus der Lagervorrichtung (24) herausgeführt ist.

3. Förderanlage nach Anspruch 1, **dadurch gekennzeichnet, dass** die motorisierte Förderrolle (5) über Lagervorrichtungen (24, 25) mit ihren Enden in Lageraufnahmen (11) an den Rahmenprofilen (4; 4') montierbar ist, wobei die Lagervorrichtungen (24, 25) jeweils eine Lagerbuchse (34, 62) aufweisen und diese auf die Enden einer Rollenachse (18) aufsteckbar sind, sodass die Rollenachse (18) zwischen den Rahmenprofilen (4; 4') mittels der Lagervorrichtungen (24, 25) getragen ist.

4. Förderanlage nach Anspruch 1, **dadurch gekennzeichnet, dass** die Lagervorrichtung (24) eine Aufnahme (46) für die Antriebselektronik (23) des Antriebsmotors (22) aufweist.

5. Förderanlage nach Anspruch 3, **dadurch gekennzeichnet, dass** zumindest eine der Lagervorrichtungen (24, 25) einen Führungsteil (33, 61) und eine die Lageraufnahme (11) in einem der Rahmenprofile (4; 4') formschlüssig hintergreifbare Rastnase (53, 78) aufweist, wobei die Lageraufnahme (11) einen den Führungsteil (33, 61) aufnehmbaren Führungsabschnitt (12) und eine an diesen oben angrenzende Einschuböffnung (13) ausbildet.

6. Förderanlage nach Anspruch 5, **dadurch gekennzeichnet, dass** die Rastnase (53, 78) auf einer elastischen Federzunge (54, 79) angeordnet ist.

7. Förderanlage nach Anspruch 1, **dadurch gekennzeichnet, dass** der Rollenkörper (19) der motorisierten Förderrolle (5) einen zylindrischen Rollenmantel und an einer seiner Stirnseiten eine Übertriebsscheibe (73) aufweist.

8. Förderanlage nach Anspruch 1, **dadurch gekennzeichnet, dass** der Rollenkörper (19) der motorisierten Förderrolle (5) einen zylindrischen Rollenmantel und eine am Rollenmantel angeordnete Beschichtung aufweist.

9. Förderanlage nach Anspruch 1, **dadurch gekennzeichnet, dass** der Rollenkörper (19) der motorisierten Förderrolle (5) einen zylindrischen Rollenmantel und einen am Rollenmantel angeordnete Konuskörper (101) aufweist.

10. Förderanlage nach Anspruch 1, **dadurch gekennzeichnet, dass** zwischen der Kontaktierungsvorrichtung (50; 50') und einer Kontaktierungsebene (94) eine Dichtung (95) angeordnet ist.

11. Förderanlage nach Anspruch 1, **dadurch gekennzeichnet, dass** die Förderrolle (5, 6) an ihren Enden über eine Ausgleichsvorrichtung (107; 107') in senkrechter Richtung relativ zu den Rahmenprofilen (4; 4') verstellbar an den Rahmenprofilen (4; 4') gelagert ist.

12. Förderanlage nach Anspruch 11, **dadurch gekennzeichnet, dass** die Ausgleichsvorrichtung (107) zwischen dem Rahmenprofil (4; 4') und der Lagervorrichtung (24, 25) angeordnet ist.

13. Förderanlage nach Anspruch 11, **dadurch gekennzeichnet, dass** die Ausgleichsvorrichtung (107') zwischen der Lagervorrichtung (24, 25) und der Rollenachse (18) angeordnet ist.

## Claims

1. Conveyor (1) for conveying material to be conveyed comprising frame profiles (4; 4'), a bus system (51) and conveyor rollers (5, 6), whereof at least one conveyor roller (5) comprises bearings (20, 21), an electrical contacting device (50; 51) for connecting a drive electronics (23) to the bus system (51), a roller body (19) and a drive motor (22) arranged inside the latter wherein the at least one conveyor roller (5) can be mounted to one of the frame profiles (4; 4) with one of its ends via a mounting device (24), wherein the bus system (51) is arranged along the conveyor (1) and wherein the contacting device (50; 50) electrically contacts lines (85; 85') of the bus system with contacting elements (88; 88') during the mounting movement of the motorized conveyor roller (5) in radial direction relative to the frame profile (4; 4'), wherein the motorized conveyor roller (5) and the mounting device (24) form an integral unit and wherein the mounting device (24) has a bearing body (32), which protrudes from the outer contour of the roller body (19) and which has an exterior surface (39) that may be applied to the frame profile (4; 4) and wherein the drive electronics (23) and the contacting device (50; 50') are connected via an electrical conduit system (87), **characterized in that** the mounting device (24) has a carrier (37) for carrying the electrical contacting device (50; 50') and that the conduit system (87) is led out of the mounting device (24) through a recess (58) offset from the exterior surface (39).

2. Conveyor according to claim 1, **characterized in that** the roller body (19) of the motorized conveyor roller (5) is mounted to be rotatable on a roller axis (18) via a first bearing (20) and a second bearing (21) and that the drive motor (22) and the drive electronics (23) are arranged between the mounting device (24) and the first bearing (20) and that the conduit system (87) is led out of the mounting device (24) outside the roller axis (18) between the first bearing (29) and the exterior surface (39) in radial direction, in particular between the drive electronics (23) and the exterior surface (39).

3. Conveyor according to claim 1, **characterized in that** the motorized conveyor roller (5) is mountable with its end in bearing retainers (11) at the frame profiles (4; 4') via bearing means (24, 25), wherein each of the mounting devices (24, 25) has a bearing bushing (34, 62), which bearing bushing (34, 62) can be plugged onto the ends of a roller axis (18), so that the roller axis (18) is held between the frame profiles (4; 4') by means of the mounting devices (24; 25).

4. Conveyor according to claim 1, **characterized in that** the mounting device (24) has a mounting (46) for the drive electronics (23) of the drive motor (22).

5. Conveyor according to claim 3, **characterized in that** at least one of the mounting devices (24, 25) has a guide (33, 61) and an engagement hook (53, 78) that forms a positively locking snap fit with the bearing retainer (11) of one of the frame profiles (4; 4'), wherein the bearing retainer (11) forms a guide section (12) that may accommodate the guide (33, 61) and an insertion opening (13) adjacent to the upper side of the guide section (12).

6. Conveyer according to claim 5, **characterized in that** the engagement hook (53, 78) is disposed on an elastic resilient lug (54, 79).

7. Conveyor according to claim 1, **characterized in that** the roller body (19) of the motorized conveyor roller (5) has a cylindrical conveyor roller jacket and a pulley (73) at one of its end faces.

8. Conveyor according to claim 1, **characterized in that** the roller body (19) of the motorized conveyor roller (5) has a cylindrical conveyor roller jacket and a coating disposed at the conveyor roller jacket.

9. Conveyor according to claim 1, **characterized in that** the roller body (19) of the motorized conveyor roller (19) has a cylindrical conveyor roller jacket and a cone body (101) arranged at the conveyor roller jacket.

10. Conveyor according to claim 1, **characterized in that** a sealing (95) is disposed between the contacting device (50; 50) and a contacting plane (94).

11. Conveyor according to claim 1, **characterized in that** the conveyor roller (5) is adjustably mounted to the frame profiles (4; 4') at its ends in vertical direction relative to the frame profiles (4; 4') via a compensating device (107; 107').

12. Conveyor according to claim 11, **characterized in that** the compensating device (107) is disposed between the frame profile (4; 4') and the mounting device (24, 25).

13. Conveyor according to claim 11, **characterized in that** the compensating device (107') is disposed between the mounting device (24, 25) and the roller axis (18).

## Revendications

1. Installation de convoyage (1) permettant le convoyage de produits avec des profilés de châssis (4 ; 4'), un système de bus (51) et des rouleaux de convoyage (5, 6), dont au moins un rouleau de convoyage (5) comprend des paliers (20, 21), un dispositif d'interconnexion électrique (50 ; 50') pour le branchement d'une électronique d'entraînement (23) au système de bus (51), un corps de rouleau (19) et un moteur d'entraînement électrique (22) disposé à l'intérieur de celui-ci, et peut être monté par l'intermédiaire d'un dispositif à paliers (24) avec une des extrémités sur un des profilés de châssis (4 ; 4'), le système de bus (51) étant disposé le long de l'installation de convoyage (1) et, lors du mouvement de montage du rouleau de convoyage (5) motorisé dans une direction radiale par rapport au profilé de châssis (4 ; 4'), le dispositif d'interconnexion (50 ; 50') avec des éléments de contact (88 ; 88') entre en contact électrique avec les lignes (85 ; 85') du système de bus (51), le rouleau de convoyage (5) motorisé et le dispositif à paliers (24) formant ensemble une unité commune et le dispositif à paliers (24) comprenant un corps de palier (32) dépassant du contour externe du corps du rouleau (19) avec une surface extérieure (39) pouvant s'appuyer contre le profilé de châssis (4 ; 4') et l'électronique d'entraînement (23) et le dispositif d'interconnexion (50 ; 50') étant reliés par l'intermédiaire d'un système de lignes électriques (87), **caractérisée en ce que** le dispositif à paliers (24) comprend un support (37) pour la fixation du dispositif d'interconnexion (50 ; 50') et **en ce que** le système de lignes électriques (87) est guidé hors du dispositif à paliers (24) par un évidement (58) réalisé séparément de la surface extérieure (39).

2. Installation de convoyage (1) selon la revendication 1, **caractérisée en ce que** le corps de rouleau (19) du rouleau motorisé (5) est logé de manière rotative grâce à un premier palier (20) et à un deuxième palier (21) sur un axe de rouleau (18) et **en ce que** le moteur d'entraînement (22) et l'électronique d'entraînement (23) se trouvent entre le dispositif à paliers (24) et le premier palier (20) et le système de lignes (87) est guidé à l'extérieur de l'axe du rouleau (18) entre le premier palier (20) et la surface extérieure (39), plus particulièrement entre l'électronique d'entraînement (23) et la surface extérieure (39), en direction radiale hors du dispositif à paliers (24).

3. Installation de convoyage selon la revendication 1, **caractérisée en ce que** le rouleau motorisé (5) peut être monté sur les profilés de châssis (4 ; 4') à l'aide de dispositifs à paliers (24, 25) avec leurs extrémités dans des logements de paliers (11), les dispositifs à paliers (24, 25) comprenant chacun une douille de palier (34, 62) et celles-ci pouvant être enfichées sur les extrémités d'un axe de rouleau (18), de façon à ce que l'axe du rouleau (18) soit supporté entre les profilés du châssis (4, 4') à l'aide des dispositifs à paliers (24, 25).

4. Installation de convoyage selon la revendication 1, **caractérisée en ce que** le dispositif à paliers (24) comprend un logement (46) pour l'électronique d'entraînement (23) du moteur d'entraînement (22).

5. Installation de convoyage selon la revendication 1, **caractérisée en ce qu'**au moins un des dispositifs à paliers (24, 25) comprend une partie de guidage (33, 61) et un embout d'encliquetage (53, 78) pouvant être accroché par complémentarité de forme avec le logement de palier (11) dans un des profilés de châssis (4 ; 4'), le logement de palier (11) comprenant une section de guidage (12) pouvant loger la partie de guidage (33, 61) et une ouverture d'insertion (13) adjacente à celle-ci en haut.

6. Installation de convoyage selon la revendication 5, **caractérisée en ce que** l'embout d'encliquetage (53, 78) se trouve sur une languette ressort élastique (54, 79).

7. Installation de convoyage selon la revendication 1, **caractérisée en ce que** le corps (19) du rouleau de convoyage motorisé (5) comprend une chemise de rouleau cylindrique et une rondelle de transmission (73) au niveau d'une de ses faces frontales.

8. Installation de convoyage selon la revendication 1, **caractérisée en ce que** le corps (19) du rouleau de convoyage motorisé (5) comprend une chemise de rouleau cylindrique et un revêtement de rouleau appliqué sur la chemise de rouleau.

9. Installation de convoyage selon la revendication 1, **caractérisée en ce que** le corps (19) du rouleau de convoyage motorisé (5) comprend une chemise de rouleau cylindrique et un corps conique (101) disposé sur la chemise de rouleau.

10. Installation de convoyage selon la revendication 1, **caractérisée en ce que**, entre le dispositif d'interconnexion (50 ; 50') et un plan d'interconnexion (94) se trouve un joint d'étanchéité (95).

11. Installation de convoyage selon la revendication 1, **caractérisée en ce que** le rouleau de convoyage (5, 6) est logé, par l'intermédiaire d'un dispositif d'équilibrage (107 ; 107'), de manière réglable au niveau des profilés de châssis (4 ; 4') dans une direction perpendiculaire aux profilés du châssis (4 ; 4').

12. Installation de convoyage selon la revendication 11, **caractérisée en ce que** le dispositif d'équilibrage (107) se trouve entre le profilé de châssis (4 ; 4') et le dispositif à paliers (24, 25).

13. Installation de convoyage selon la revendication 11, **caractérisée en ce que** le dispositif d'équilibrage (107') se trouve entre le dispositif à paliers (24, 25) et l'axe du rouleau (18).
